# EUROPEAN PATENT SPECIFICATION

(11) **EP 3 892 154 B1**
(45) Date of publication and mention of the grant of the patent: **03.07.2024**
(21) Application number: 20382284.6
(22) Date of filing: 08.04.2020
(51) Int. Cl.: A47B 13/08, A47B 77/02, A47B 96/20, B32B 3/08, B32B 33/00

(54) **LAMINATED MODULE AND METHOD OF MANUFACTURING THE SAME**
LAMINIERTES MODUL UND FERTIGUNGSVERFAHREN
MODULE LAMINÉ ET MÉTHODE DE FABRICATION DE CELUI-CI

(43) Date of publication of application: 13.10.2021
(73) Proprietor: Cosentino Research & Development, S.L., 04850 Cantoria, Almeria (ES)
(72) Inventor: DOMINGO MILLÁN, José Manuel, 04850 Cantoria, Almería (ES); TALLADA MARTÍNEZ, María, 04850 Cantoria, Almería (ES); RUEDA BELMONTE, Francisco José, 04850 Cantoria, Almería (ES)
(74) Representative: ABG Intellectual Property Law, S.L.

(56) References cited:
- KR-A- 20170 056 137
- NZ-A- 568 741
- US-A1- 2004 108 053
- US-A1- 2011 281 131

## Description

### Object of the Invention

The invention is comprised in the field of work or decorative surfaces such as worktops, counters, top boards of furniture and the like; particularly, work surfaces manufactured from materials providing a useful surface with a high decorative value and high resistance to abrasion, impact, stainability, and/or chemical etching.

The invention relates to a laminated module envisaged for use thereof as a work and/or decorative surface and to a method of manufacturing the same.

### Background of the Invention

The materials most often used today as work surfaces are natural stones (for example, granites or marbles) and artificial quartz composite stone. The prevalence of materials of this type for these applications results from their ornamental properties and the capacity of these materials to acceptably withstand wear or deterioration of their properties during use. Furthermore, in recent years there is a growing trend towards the use of porcelain ceramic material (also called porcelain stoneware) for these applications, from the development of the technology which allowed producing these materials in large formats and with thicknesses from 1 cm. In addition to a considerable hardness and chemical/thermal resistance, porcelain ceramic materials have an open porosity and a very low liquid absorption which, along with the decorative possibilities of ceramic, makes them extremely suitable for use as worktops and similar applications.

The manufacture of work surfaces requires boards with large dimensions, which allow producing the required forms and reduce the number of joints between parts which, in addition to being unsightly, favor dirt and microorganism buildup. The thicknesses of the boards in the most common applications range from 12 mm to 30 mm.

Due to the usual dimensions of the boards and their nature (natural stone, artificial stone, or porcelain ceramic), one of the main drawbacks of these materials is their high weight and difficulty in handling the same. Additionally, due to their considerable hardness, the boards must be handled, produced, and installed by highly specialized professionals (marble workers) who are well trained to that end, it being a difficult task which requires the use of specific equipment of certain complexity.

To solve the problem relating to the high weight of the boards, a number of laminated products combining the resistance and esthetic properties of natural stone, artificial stone, or porcelain ceramic, with a low-density support, such as foams, wooden boards, joist slabs, honeycomb slabs, or other porous materials, have been proposed. Document DE 202006016106 U1 describes a laminated product of this type. Generally, a thin layer of not more than 10 mm of a resistant material, such as natural stone, artificial stone, or ceramic, is adhered to the lightweight support, optionally with other reinforcement or functional layers. The layer of resistant material provides the useful surface of the board. In addition to significantly reducing the weight of the boards, this solution facilitates their production, given that even though a layer of natural stone, artificial stone, or ceramic material with considerable hardness is also used, due to the low thickness of this layer, it can be cut with conventional woodworking tools or the likes.

Laminated boards also present drawbacks even when they suitably solve weight-related problems and at least partially facilitate the production of boards with large dimensions. In that sense, one of the difficulties posed by laminated boards is the finishing of the edges which, in addition to having a crucial esthetic factor, is important in order to provide the board with mechanical strength during use, as well as robustness during its transport, exhibition, and sale.

Several ways of carrying out the finishing of the edges of laminated boards have been described in the art. In the simplest cases, the straight cut edge of the laminate, perpendicular to the larger surface of the board, is covered with a skirt or thin band made of the same resistant material used for the thin layer forming the useful surface of the board. However, in this solution there is a high risk of the skirt peeling off during use. Furthermore, the edge finished in this manner has a low resistance to impacts or a low bending strength when pressure is applied. Moreover, the material of the less resistant low-density support layer is exposed on the lower part of the laminate, constituting an esthetic shortcoming and a drawback due to the lower mechanical strength and chemical resistance in that exposed area.

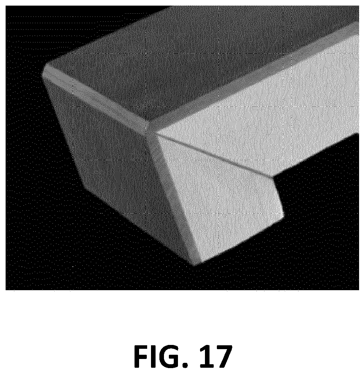

An alternative way of finishing the edges of laminated boards of this type is by means of gluing a small piece, with the same sheet configuration as the board, forming a 90° angle with the larger surface of the board. This small piece is usually miter glued with the board, with both edges to be glued together having been cut at complementary angles, usually at 45°, as shown in Figure 17. However, this proposal continues to suffer limitations in terms of resistance to peeling, resistance to impacts, and bending strength of the preceding solution. Furthermore, the lower part of the board in the area of the edge is still exposed to mechanical or chemical aggressions, and also being susceptible to improvement esthetically speaking.

Edge finishings where the parts are glued at 90° with respect to the larger surface of the board, incorporating reinforcement profiles, have also been proposed. These profiles are glued to the parts and to the board, such that they are concealed by the concealed part of the board during use. Although these profiles significantly improve the resistance to peeling and impact of the edges, as well as their bending strength, they still present problems relating to esthetics and the exposure of the lower part of the board to mechanical and chemical agents.

Documents WO2005/014285A , US 2004/108053 A1 and WO01/54539A1 describe products with edge finishings.

### Description of the Invention

The present invention proposes a solution to the preceding problems by means of a laminated module according to claim 1 and a method of manufacturing the laminated module according to claim 12. The dependent claims define preferred embodiments of the invention.

In a first aspect, the invention relates to a laminated module comprising a laminated board, a first pair of side battens, and a first pair of front battens.

The board comprises a covering layer and a supporting layer, wherein the covering layer defines an upper surface and the supporting layer defines a lower surface. The board comprises a first side edge and a first front edge, both beveled such that the upper surface of the board is larger than the lower surface of the board. The upper surface of the board or useful surface is the face of the board envisaged for being exposed during use of the module as a work surface, whereas the lower surface is the opposite surface of the board or "non-visible" surface during use of the module as a work surface. The upper surface and the lower surface define the thickness of the board.

The terms upper and lower are used, without being limiting, for a better understanding of the invention and refer, in their more common meaning, to the position in the vertical direction with respect to the ground during use of the module as a horizontal work surface.

The first pair of side battens comprises a first side batten and a second side batten. The first side batten comprises a first longitudinal edge and a second longitudinal edge, an outer face, and a first end edge and a second end edge. The second side batten comprises a first longitudinal edge and a second longitudinal edge, an outer face, and a first end edge and a second end edge.

The first pair of front battens comprises a first front batten and a second front batten. The first front batten comprises a first longitudinal edge and a second longitudinal edge, an outer face, and a first end edge and a second end edge. The second front batten comprises a first longitudinal edge and a second longitudinal edge, an outer face, and a first end edge and a second end edge.

The second longitudinal edge of the first side batten and the first longitudinal edge of the second side batten are beveled at substantially complementary angles and attached to one another. The first longitudinal edge of the first side batten and the first side edge of the board are beveled at substantially complementary angles and attached to one another. The second longitudinal edge of the second side batten and the first side edge of the board are beveled substantially with the same bevel angle and attached to one another.

The second longitudinal edge of the first front batten and the first longitudinal edge of the second front batten are beveled at substantially complementary angles and attached to one another. The first longitudinal edge of the first front batten and the first front edge of the board are beveled at substantially complementary angles and attached to one another. The second longitudinal edge of the second front batten and the first front edge of the board are beveled substantially with the same bevel angle and attached to one another.

The first end edge of the first side batten and the first end edge of the first front batten are beveled at substantially complementary angles and attached to one another such that the longitudinal directions of the first side batten and of the first front batten are substantially perpendicular and the outer face of the first side batten is substantially perpendicular to the outer face of the first front batten.

The first end edge of the second side batten and the first end edge of the second front batten are beveled at substantially complementary angles and attached to one another such that the longitudinal directions of the second side batten and of the second front batten are substantially perpendicular, and the outer face of the second side batten is substantially coplanar with the outer face of the second front batten.

The longitudinal edges of the battens correspond to the edges extending along the longitudinal direction of the batten, whereas the end edges of the battens are transverse to the longitudinal direction of the batten and define the ends of the battens in said longitudinal direction. The outer face of the battens is the face envisaged for being visible at the edge of the module, or for being in the proximity of the edge of the module, during use of the module as a work surface.

The module of the invention provides a high resistance to impact and a high bending strength, particularly in the area of the edges of the module, as well as an improved esthetic aspect. Furthermore, the module of the invention reduces the exposed surface of the material forming the supporting layer through the lower face of the module, and does not suffer from peeling-related problems which afflict boards of the prior art.

Preferably, the covering layer and the supporting layer are made of different materials. Preferably, the covering layer is manufactured in a material that is stronger and has a higher density than the supporting layer. Preferably, the covering layer comprises a material selected from natural stone, artificial stone, and ceramic material, more preferably a porcelain ceramic material. Also preferably, the supporting layer comprises a porous or foamy, inorganic or organic material. Though defined as *'*layer*'*, the covering layer and/or the supporting layer should not be understood as having to be formed by a single homogeneous material. Both the covering layer and the supporting layer may comprise several layers of different materials, such as reinforcement layers, esthetic layers, or layers with other functionalities. Therefore, the covering layer may comprise on its lower face a sheet of glass mesh as reinforcement. Similarly, the supporting layer may include on its lower face a sheet of printed kraft paper to improve the esthetic aspect of the module. In embodiments included in the invention, the supporting layer may comprise a layer of porous material and, on its lower face, a thin layer of the same material of the covering layer, optionally natural stone, artificial stone, or ceramic material.

The battens can be attached to one another and to the board of the module by means of any known method. Preferably, the battens are attached by means of a suitable adhesive, such as an epoxy adhesive or a polyurethane-based adhesive. However, the attachment can also be performed using physical anchoring or by heat sealing.

In one embodiment, the first side edge of the board is beveled with a bevel angle of between 40° and 50°, preferably between 43° and 47°, and more preferably 45°.

In one embodiment, the first front edge of the board is beveled with a bevel angle of between 40° and 50°, preferably between 43° and 47°, and more preferably 45°.

In one embodiment, the second longitudinal edge of the first side batten is beveled with a bevel angle of between 40° and 50°, preferably between 43° and 47°, and more preferably 45°.

In one embodiment, the second longitudinal edge of the first front batten is beveled with a bevel angle of between 40° and 50°, preferably between 43° and 47°, and more preferably 45°.

In one embodiment, the first end edge of the first side batten is beveled with a bevel angle of between 40° and 50°, preferably between 43° and 47°, and more preferably 45°.

In one embodiment, the first end edge of the second side batten is beveled with a bevel angle of between 40° and 50°, preferably between 43° and 47°, and more preferably 45°.

Throughout the present document, the mentioned angles will be understood to be internal angles, contained between two planes or two lines of the corresponding element.

In one embodiment, the first side batten and the second side batten have a length substantially equal to the width of the board, a width substantially equal to the thickness of the board, and a thickness substantially equal to half the thickness of the board.

In one embodiment, the first front batten and the second front batten have a length substantially equal to the length of the board, a width substantially equal to the thickness of the board, and a thickness substantially equal to half the thickness of the board.

In one embodiment, at least one of the first side batten, second side batten, first front batten, and second front batten is a laminated batten comprising a covering layer and a supporting layer. Preferably, all the battens are laminated battens comprising a covering layer and a supporting layer. Preferably, the materials of the laminated board and of the laminated battens are the same. Advantageously, this allows obtaining the board and the battens by cutting one and the same initial laminated panel. Therefore, both the board and the battens are preferably obtained from one and the same initial laminated panel, or from several laminated panels formed by the same materials.

In one embodiment, at least the part of the covering layer defining the outer face of the laminated battens is made of the same material as the part of the covering layer defining the upper surface of the laminated board. In this embodiment, the rest of the covering layer of the laminated battens may differ from the covering layer of the laminated board; particularly it may differ in the layers and/or materials forming the covering layer. Furthermore, the supporting layer of the laminated battens may be the same as or may differ from the supporting layer of the laminated board; particularly it may differ in the layers and/or materials forming the supporting layer. In a preferred embodiment, at least part of the supporting layer of the laminated battens is made of the same material as at least part of the supporting layer of the laminated board. Therefore, in this embodiment the supporting layer of the laminated battens comprising the same material as the supporting layer of the board may differ from the supporting layer of the laminated board; particularly it may differ in the layers and/or materials forming the supporting layer. For example, the covering layer and/or the supporting layer of the board may include a reinforcement mesh and/or an esthetic sheet which are not included in the laminated batten.

In one embodiment, the thickness of the covering layer of the laminated batten is comprised between 2 and 10 mm, more preferably between 3 and 8 mm.

In one embodiment, the thickness of the supporting layer of the laminated batten is comprised between 5 and 20 mm, more preferably between 7 and 17 mm.

In one embodiment, the covering layer of the laminated batten and/or of the laminated board has a thickness smaller than the supporting layer.

In one embodiment, the thickness of the covering layer of the board is comprised between 2 and 10 mm, more preferably between 3 and 8 mm.

In one embodiment, the thickness of the supporting layer of the board is comprised between 10 and 40 mm, more preferably between 15 and 35 mm.

In one embodiment, the thickness of the supporting layer of the board will be between 2.5 and 15.0 times, preferably between 3.5 and 9.0 times, the thickness of the covering layer of the board.

In the context of the invention, it will be understood that the lower and upper limits of the intervals are included in the intervals. For example, in the interval between a1 and a2, both a1 and a2 are comprised in the interval.

In one embodiment, the board comprises a second beveled side edge and the module comprises a second pair of side battens. The second pair of side battens comprises a third side batten and a fourth side batten. The third side batten comprises a first longitudinal edge and a second longitudinal edge, an outer face, and a first end edge and a second end edge. The fourth side batten comprises a first longitudinal edge and a second longitudinal edge, an outer face, and a first end edge and a second end edge.

The second longitudinal edge of the third side batten and the first longitudinal edge of the fourth side batten are beveled at substantially complementary angles and attached to one another. The first longitudinal edge of the third side batten and the second side edge of the board are beveled at substantially complementary angles and attached to one another. The second longitudinal edge of the fourth side batten and the second side edge of the board are beveled substantially with the same bevel angle and attached to one another.

The first end edge of the third side batten and the second end edge of the first front batten are beveled at substantially complementary angles and attached to one another such that the longitudinal directions of the third side batten and of the first front batten are substantially perpendicular and the outer face of the third side batten is substantially perpendicular to the outer face of the first front batten. The first end edge of the fourth side batten and the second end edge of the second front batten are beveled at substantially complementary angles and attached to one another such that the longitudinal directions of the fourth side batten and of the second front batten are substantially perpendicular, and the outer face of the fourth side batten is substantially coplanar with the outer face of the second front batten.

In one embodiment, the board comprises a second beveled front edge and the module comprises a second pair of front battens. The second pair of front battens comprises a third front batten and a fourth front batten. The third front batten comprises a first longitudinal edge and a second longitudinal edge, an outer face, and a first end edge and a second end edge. The fourth front batten comprises a first longitudinal edge and a second longitudinal edge, an outer face, and a first end edge and a second end edge.

The second longitudinal edge of the third front batten and the first longitudinal edge of the fourth front batten are beveled at substantially complementary angles and attached to one another. The first longitudinal edge of the third front batten and the second front edge of the board are beveled at substantially complementary angles and attached to one another. The second longitudinal edge of the fourth front batten and the second front edge of the board are beveled substantially with the same bevel angle and attached to one another.

The second end edge of the first side batten and the first end edge of the third front batten are beveled at substantially complementary angles and attached to one another such that the longitudinal directions of the first side batten and of the third front batten are substantially perpendicular and the outer face of the first side batten is substantially perpendicular to the outer face of the third front batten.

The second end edge of the second side batten and the first end edge of the fourth front batten are beveled at substantially complementary angles and attached to one another such that the longitudinal directions of the second side batten and of the fourth front batten are substantially perpendicular, and the outer face of the second side batten is substantially coplanar with the outer face of the fourth front batten.

In a second aspect, the invention relates to method of manufacturing a module according to any of the claims of the first inventive aspect, the method comprising the following steps:
a) providing a laminated board comprising a covering layer and a supporting layer, wherein the covering layer defines an upper surface and the supporting layer defines a lower surface; and wherein the board comprises a first side edge and a first front edge, both beveled such that the upper surface of the board is larger than the lower surface of the board;
b) providing a first side batten and a second side batten; the first side batten comprising a first longitudinal edge and a second longitudinal edge, an outer face, and a first end edge and a second end edge; the second side batten comprising a first longitudinal edge and a second longitudinal edge, an outer face, and a first end edge and a second end edge; wherein the second longitudinal edge of the first side batten and the first longitudinal edge of the second side batten are beveled at substantially complementary angles; wherein the first longitudinal edge of the first side batten and the first side edge of the board are beveled at substantially complementary angles; and wherein the second longitudinal edge of the second side batten and the first side edge of the board are beveled substantially with the same bevel angle;
c) providing a first front batten and a second front batten; the first front batten comprising a first longitudinal edge and a second longitudinal edge, an outer face, and a first end edge and a second end edge; the second front batten comprising a first longitudinal edge and a second longitudinal edge, an outer face, and a first end edge and a second end edge; wherein the second longitudinal edge of the first front batten and the first longitudinal edge of the second front batten are beveled at substantially complementary angles; wherein the first longitudinal edge of the first front batten and the first front edge of the board are beveled at substantially complementary angles; and wherein the second longitudinal edge of the second front batten and the first front edge of the board are beveled substantially with the same bevel angle;
d) attaching the second longitudinal edge of the first side batten and the first longitudinal edge of the second side batten;
e) attaching the first longitudinal edge of the first side batten and the first side edge of the board;
f) attaching the second longitudinal edge of the second side batten and the first side edge of the board;
g) attaching the second longitudinal edge of the first front batten and the first longitudinal edge of the second front batten;
h) attaching the first longitudinal edge of the first front batten and the first front edge of the board;
i) attaching the second longitudinal edge of the second front batten and the first front edge of the board.

The steps comprised in the method of the invention do not necessarily have to be performed sequentially in the described order, with another order of steps being possible without departing from the inventive concept. Likewise, two or more of those steps comprised in the inventive method can be performed simultaneously.

The method of the invention allows the manufacturing of laminated modules in a simple manner, reducing or at least facilitating the steps required for manufacturing the module and for installing the same in its usage application.

In an embodiment of the method, the first end edge of the first side batten and the first end edge of the first front batten are beveled at substantially complementary angles, and the first end edge of the second side batten and the first end edge of the second front batten are beveled at substantially complementary angles. In this embodiment, the method additionally comprises the following steps:
j) attaching the first end edge of the first side batten and the first end edge of the first front batten such that the longitudinal directions of the first side batten and of the first front batten are substantially perpendicular and the outer face of the first side batten is substantially perpendicular to the outer face of the first front batten;
k) attaching the first end edge of the second side batten and the first end edge of the second front batten such that the longitudinal directions of the second side batten and of the second front batten are substantially perpendicular, and the outer face of the second side batten is substantially coplanar with the outer face of the second front batten.

In an embodiment of the method, the board comprises a second beveled side edge and the method additionally comprises the following steps:
providing a third side batten and a fourth side batten; the third side batten comprising a first longitudinal edge and a second longitudinal edge, an outer face, and a first end edge and a second end edge; the fourth side batten comprising a first longitudinal edge and a second longitudinal edge, an outer face, and a first end edge and a second end edge; wherein the second longitudinal edge of the third side batten and the first longitudinal edge of the fourth side batten are beveled at substantially complementary angles; wherein the first longitudinal edge of the third side batten and the second side edge of the board are beveled at substantially complementary angles; wherein the second longitudinal edge of the fourth side batten and the second side edge of the board are beveled substantially with the same bevel angle;
attaching the second longitudinal edge of the third side batten and the first longitudinal edge of the fourth side batten;
attaching the first longitudinal edge of the third side batten and the second side edge of the board; and
attaching the second longitudinal edge of the fourth side batten and the second side edge of the board.

In an embodiment of the method, the first end edge of the third side batten and the second end edge of the first front batten are beveled at substantially complementary angles, and the first end edge of the fourth side batten and the second end edge of the second front batten are beveled at substantially complementary angles. In this embodiment, the method comprises:
attaching the first end edge of the third side batten and the second end edge of the first front batten such that the longitudinal directions of the third side batten and of the first front batten are substantially perpendicular and the outer face of the third side batten is substantially perpendicular to the outer face of the first front batten; and
attaching the first end edge of the fourth side batten and the second end edge of the second front batten such that the longitudinal directions of the fourth side batten and of the second front batten are substantially perpendicular, and the outer face of the fourth side batten is substantially coplanar with the outer face of the second front batten.

In an embodiment of the method, the board comprises a second beveled front edge and the method additionally comprises the following steps:
providing a third front batten and a fourth front batten; the third front batten comprising a first longitudinal edge and a second longitudinal edge, an outer face, and a first end edge and a second end edge; the fourth front batten comprising a first longitudinal edge and a second longitudinal edge, an outer face, and a first end edge and a second end edge; wherein the second longitudinal edge of the third front batten and the first longitudinal edge of the fourth front batten are beveled at substantially complementary angles; wherein the first longitudinal edge of the third front batten and the second front edge of the board are beveled at substantially complementary angles; wherein the second longitudinal edge of the fourth front batten and the second front edge of the board are beveled substantially with the same bevel angle;
attaching the second longitudinal edge of the third front batten and the first longitudinal edge of the fourth front batten;
attaching the first longitudinal edge of the third front batten and the second front edge of the board; and
attaching the second longitudinal edge of the fourth front batten and the second front edge of the board.

In an embodiment of the method, the second end edge of the first side batten and the first end edge of the third front batten are beveled at substantially complementary angles, and the second end edge of the second side batten and the first end edge of the fourth front batten are beveled at substantially complementary angles. In this embodiment, the method comprises:
attaching the second end edge of the first side batten and the first end edge of the third front batten such that the longitudinal directions of the first side batten and of the third front batten are substantially perpendicular and the outer face of the first side batten is substantially perpendicular to the outer face of the third front batten; and
attaching the second end edge of the second side batten and the first end edge of the fourth front batten such that the longitudinal direction of the second side batten and of the fourth front batten are substantially perpendicular, and the outer face of the second side batten is substantially coplanar with the outer face of the fourth front batten.

In an embodiment of the method, wherein the module includes a third side batten and a fourth side batten and a third front batten and a fourth front batten, the second end edge of the third side batten and the second end edge of the third front batten are beveled at substantially complementary angles, and the second end edge of the fourth side batten and the second end edge of the fourth front batten are beveled at substantially complementary angles. In this embodiment, the method comprises:
attaching the second end edge of the third side batten and the second end edge of the third front batten such that the longitudinal directions of the third side batten and of the third front batten are substantially perpendicular and the outer face of the third side batten is substantially perpendicular to the outer face of the third front batten; and
attaching the second end edge of the fourth side batten and the second end edge of the fourth front batten such that the longitudinal direction of the fourth side batten and of the fourth front batten are substantially perpendicular, and the outer face of the fourth side batten is substantially coplanar with the outer face of the fourth front batten.

In an embodiment of the method, steps a) to c) result from the following earlier steps:
providing a laminated panel; and
cutting the panel to obtain the board, the first side batten, the second side batten, the first front batten, and the second front batten.

Advantageously, when the board and all the battens are obtained from one and the same initial laminated panel, improved material usage and waste reduction are achieved.

In an embodiment in which the module includes a third side batten and a fourth side batten and/or a third front batten and a fourth front batten, these battens can also be obtained from the initial panel.

In one embodiment, the step of providing a laminated panel comprises attaching a supporting layer to a covering layer.

A third inventive aspect defines the use of a module according to any of the embodiments of the first inventive aspect as a work and/or decorative surface. In one embodiment, the work and/or decorative surface is a worktop, a counter, or the top board of a piece of furniture.

All the features and/or method steps described in this specification (including the claims, description, and drawings) may be combined in any combination, with the exception of combinations of such mutually exclusive features.

Substantially complementary angles must be understood as angles the sum of which is close to 90° for all intents and purposes, preferably angles the sum of which is 90° ± 5°, or more preferably 90° ± 3°. Bevel angles that are substantially the same are understood to be bevel angles that do not differ significantly from one another, preferably they do not differ by more than 5°, or by more than 3°. Substantially perpendicular must be understood to be the situation in which two directions or two planes form an approximate angle of 90° for all intents and purposes, preferably an angle of 90° ± 5°, or more preferably 90° ± 3°. Substantially coplanar is understood to be parallel surfaces forming a surface continuity for all intents and purposes.

### Description of the Drawings

These and other features and advantages of the invention will be more clearly understood based on the following detailed description of a preferred embodiment, given only by way of non-limiting illustrative example in reference to the attached figures. These figures are presented in a schematic manner and without necessarily maintaining the scale ratio.
Figures 1 and 2 show two exploded views of a module according to an embodiment of the invention.
Figures 3 and 4 show two exploded views of the first side edge of the board and the first pair of side battens of a module according to an embodiment of the invention.
Figures 5 and 6 show two exploded views of the first front edge of the board and the first pair of front battens of a module according to an embodiment of the invention.
Figures 7 and 8 show two enlarged details of a module according to an embodiment of the invention with its elements partially assembled.
Figures 9A, 9B, and 10 show three views of a module according to an embodiment of the invention.
Figures 11 to 16 exemplify the method of manufacturing a module through different views of its components according to an embodiment of the invention.
Figure 17 shows an edge finishing according to the prior art.

### Detailed Disclosure of the Invention

### Laminated module

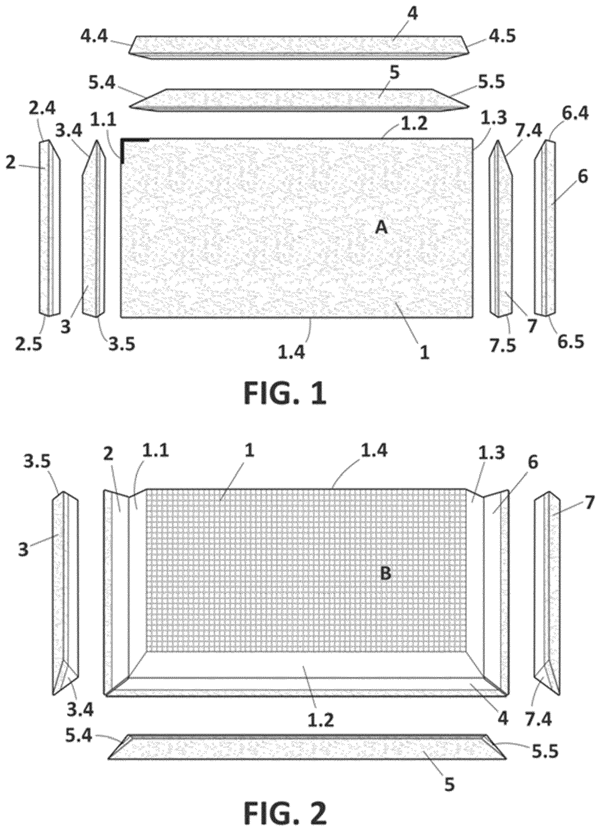

The invention proposes, in its first aspect, a laminated module envisaged for use thereof as a work surface. The laminated module comprises a laminated board (1), a first pair of side battens (2, 3), and a first pair of front battens (4, 5). Figures 1 and 2 show two exploded views of a module according to an embodiment of the invention, in which these elements can be seen.

The laminated board (1) has a planar configuration with four edges, particularly a first side edge (1.1), a first front edge (1.2), a second side edge (1.3), and a second front edge (1.4). The board (1) has a length and a width. In this embodiment, the front edges (1.2, 1.4) are longer than the side edges (1.1, 1.3). The front edges (1.2, 1.4) are opposite one another through the width of the board, and the side edges (1.1, 1.3) are opposite one another through the length of the board.

The board (1) comprises a covering layer (1.10) and a supporting layer (1.20). The covering layer (1.10) defines an upper surface (A), corresponding to the useful surface of the module in a situation in which the module is used as a horizontal work surface, and the supporting layer (1.20) defines a lower surface (B), corresponding to the non-visible surface during use of the module as a work surface. In the embodiment shown in the figures, the supporting layer comprises a reticular reinforcement mesh made, for example, of glass fiber, on its lower face. The upper surface (A) and the lower surface (B) define the thickness of the board (1).

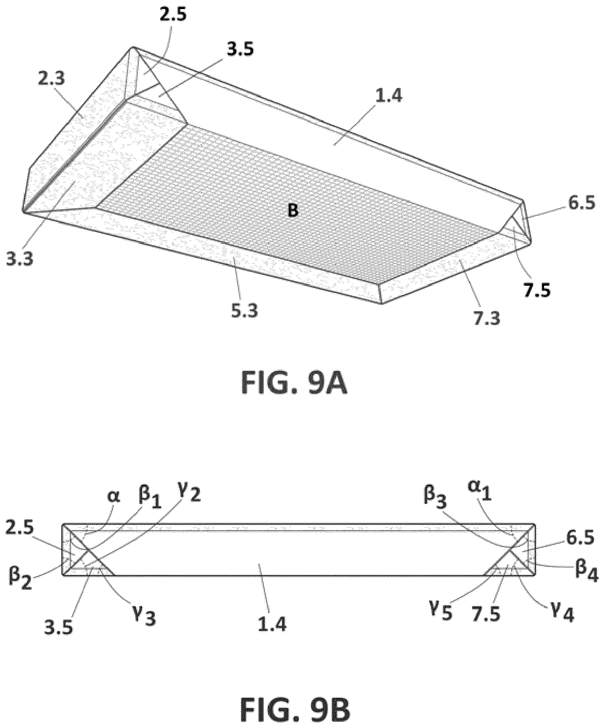

The first side edge (1.1) and the first front edge (1.2) are beveled such that the upper surface (A) of the board is larger than the lower surface (B) of the board. Figure 2 shows the beveled edges. Preferably, the bevel angle of the beveled edges is about 45°. The bevel of the first front edge (1.2) is made in relation to the plane formed by the width and the thickness of the board, whereas the bevel of the first side edge (1.1) is made in relation to the plane formed by the length and the thickness of the board. The angle α formed between the plane containing the first side edge (1.1) of the board and the plane containing the upper surface (A) of the board is identified in Figure 9B. As mentioned, in this embodiment α is substantially 45°, but in other embodiments it can have another value. In this embodiment, the plane containing the second front edge (1.4) of the board forms an approximate angle of 90° with the plane containing the outer surface (A) of the board.

In the module of this first aspect, the first pair of side battens (2, 3) is attached to the first side edge (1.1) of the board (1) and the first pair of front battens (4, 5) is attached to the first front edge (1.2) of the board (1). Nevertheless, Figures 1 to 6 show the front and side battens being decoupled from the board so that said battens may be seen better. Furthermore, in some of the figures one of the corners of the board has been depicted in a thicker line to serve as a visual guide.

The first pair of side battens (2, 3) comprises a first side batten (2) and a second side batten (3). The first side batten (2) comprises a first longitudinal edge (2.1), a second longitudinal edge (2.2), an outer face (2.3), a first end edge (2.4), and a second end edge (2.5). The second side batten (3) comprises a first longitudinal edge (3.1), a second longitudinal edge (3.2), an outer face (3.3), a first end edge (3.4), and a second end edge (3.5). Preferably, the first side batten (2) and the second side batten (3) have a maximum length approximately equal to the width of the board (1), a maximum width approximately equal to the thickness of the board (1), and a maximum thickness approximately equal to half the thickness of the board (1).

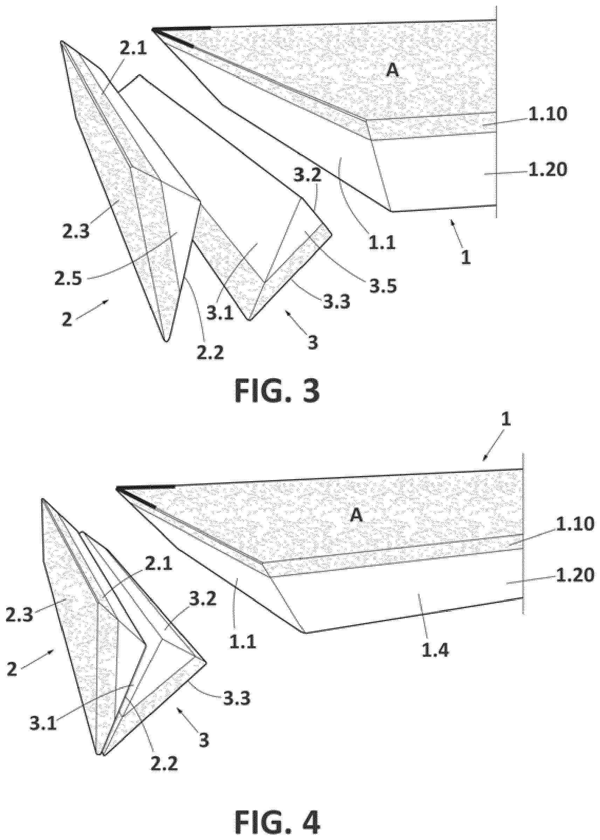

The second longitudinal edge (2.2) of the first side batten (2) and the first longitudinal edge (3.1) of the second side batten (3) are beveled at substantially complementary angles (β₂, γ₂). The first longitudinal edge (2.1) of the first side batten (2) and the first side edge (1.1) of the board (1) are beveled at substantially complementary angles (β₁, α). The second longitudinal edge (3.2) of the second side batten (3) and the first side edge (1.1) of the board (1) are beveled substantially with the same bevel angle (γ₃, α). Figures 3 and 4 show the first side batten (2) and the second side batten (3), as well as the first side edge (1.1) of the board (1). In the shown embodiment, the bevels of the first side batten (2) and of the second side batten (3) were done by means of making opposite longitudinal cuts along the length of the side battens (2, 3), at an approximate angle of 45° with respect to the plane formed by the length and the width of the batten, i.e., the plane containing the outer face of the batten. The following is identified in Figure 9B: the angle β₁ formed between the plane containing the first longitudinal edge (2.1) of the first side batten (2) and the plane containing the outer face (2.3) of the first side batten (2); the angle β₂ formed between the plane containing the second longitudinal edge (2.2) of the first side batten (2) and the plane containing the outer face (2.3) of the first side batten (2); the angle γ₂ formed between the plane containing the first longitudinal edge (3.1) of the second side batten (3) and the plane containing the outer face (3.3) of the second side batten (3); and the angle γ₃ formed between the plane containing the second longitudinal edge (3.2) of the second side batten (3) and the plane containing the outer face (3.3) of the second side batten (3). As mentioned, in this embodiment β₁, β₂, γ₂, and γ₃ are substantially 45°, but in other embodiments they may have other values.

Preferably, the first side batten (2) and the second side batten (3) are laminated battens with the same composition of layers as the laminated board, with the exception of the reinforcement mesh of the board (1) which is not present in the battens as they have a smaller thickness. In this embodiment, the covering layer of the side battens (2, 3) has a maximum width corresponding to the thickness of the board, and it is the layer which is exposed at the side edge of the constructed module.

The second longitudinal edge (2.2) of the first side batten (2) and the first longitudinal edge (3.1) of the second side batten (3) are attached to one another along their length. Figure 4 schematically shows the coupling of the first side batten (2) and the second side batten (3) to one another.

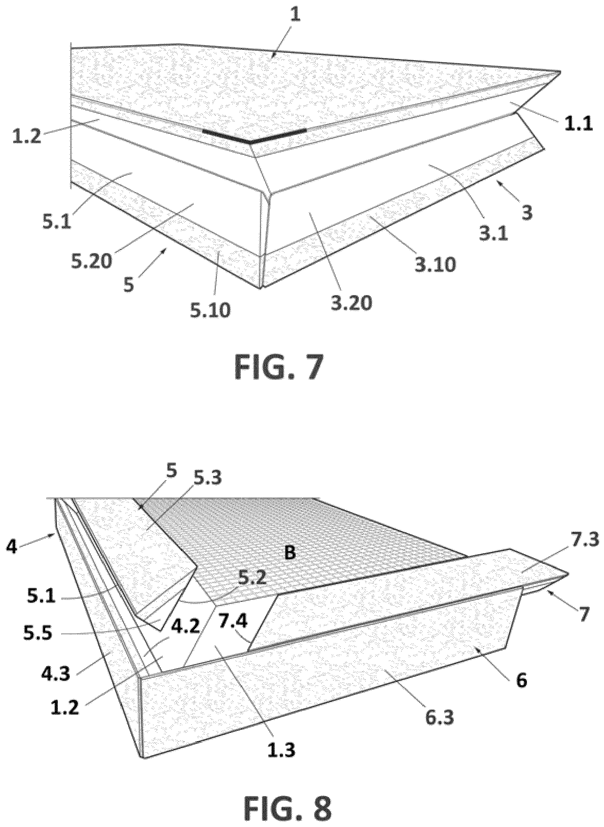

The first longitudinal edge (2.1) of the first side batten (2) and the second longitudinal edge (3.2) of the second side batten (3) are attached to the first side edge (1.1) of the board (1). Figure 7 schematically shows the coupling of the second side batten (3) to the first side edge (1.1) in a situation in which the module is partially assembled. Figures 9A and 9B show the first side batten (2) and the second side batten (3) attached to the first side edge (1.1) of the board (1).

The outer face (2.3) of the first side batten (2) is the widest surface of the first side batten (2) and forms the exposed (or outer) face of the side edge of the module, whereas the outer face (3.3) of the second side batten (3) is the widest surface of the second side batten (3) and forms the exposed lower face in the proximity of the side edge of the module.

The first pair of front battens (4, 5) comprises a first front batten (4) and a second front batten (5). The first front batten (4) comprises a first longitudinal edge (4.1), a second longitudinal edge (4.2), an outer face (4.3), a first end edge (4.4), and a second end edge (4.5). The second front batten (5) comprises a first longitudinal edge (5.1), a second longitudinal edge (5.2), an outer face (5.3), a first end edge (5.4), and a second end edge (5.5). Preferably, the first front batten (4) and the second front batten (5) have a maximum length approximately equal to the length of the board (1), a maximum width approximately equal to the thickness of the board (1), and a maximum thickness approximately equal to half the thickness of the board (1).

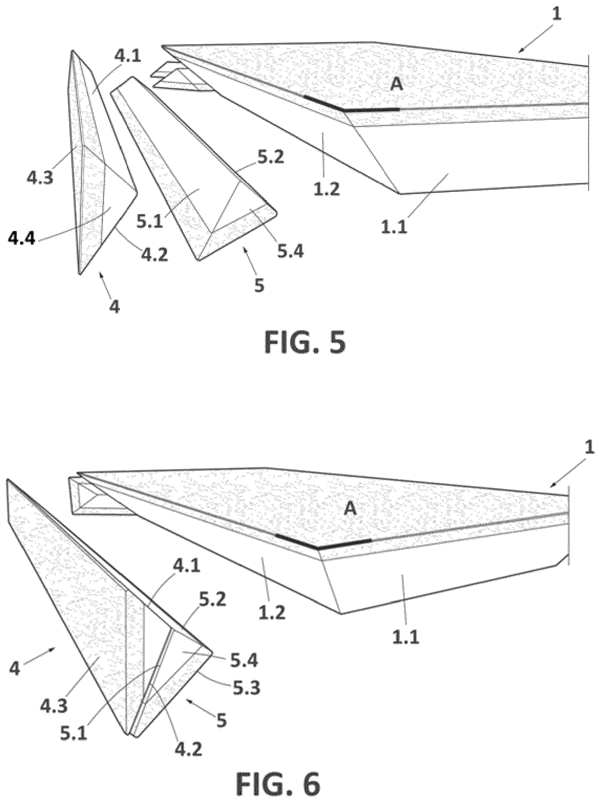

The second longitudinal edge (4.2) of the first front batten (4) and the first longitudinal edge (5.1) of the second front batten (5) are beveled at substantially complementary angles. The first longitudinal edge (4.1) of the first front batten (4) and the first front edge (1.2) of the board (1) are beveled at substantially complementary angles. The second longitudinal edge (5.2) of the second front batten (5) and the first front edge (1.2) of the board (1) are beveled substantially with the same bevel angle. Figures 5 and 6 show the first front batten (4) and the second front batten (5), as well as the first front edge (1.2) of the board (1). In the shown embodiment, the bevels of the first front batten (4) and of the second front batten (5) have been made by means of making opposite longitudinal cuts along the length of the front battens (4, 5), at an approximate angle of 45° with respect to the plane formed by the length and the width of the batten, i.e., the plane containing the outer face (4.3, 5.3) of the batten. Preferably, the first front batten (4) and the second front batten (5) are laminated battens with the same composition of layers as the laminated board, with the exception of the reinforcement mesh of the board (1) which is not present in the battens as they have a smaller thickness. In this embodiment, the covering layer of the front battens (4, 5) has a maximum width corresponding to the thickness of the board, and it is the layer which is exposed (or arranged on the outside) at the front edge of the constructed module.

The second longitudinal edge (4.2) of the first front batten (4) and the first longitudinal edge (5.1) of the second front batten (5) are attached to one another along their length. Figure 6 schematically shows the coupling of the first front batten (4) and the second front batten (5) attached to one another.

The first longitudinal edge (4.1) of the first front batten (4) and the second longitudinal edge (5.2) of the second front batten (5) are attached to the first front edge (1.2) of the board (1). Figures 7 and 8 schematically show the coupling of the first front batten (4) and the second front batten (5) to the first front edge (1.2) in situations in which the module is partially assembled.

The outer face (4.3) of the first front batten (4) is the widest surface of the first front batten (4) and forms the exposed (or outer) face of the front edge of the module, whereas the outer face (5.3) of the second front batten (5) is the widest surface of the second front batten (5) and forms the exposed lower face in the proximity of the front edge of the module.

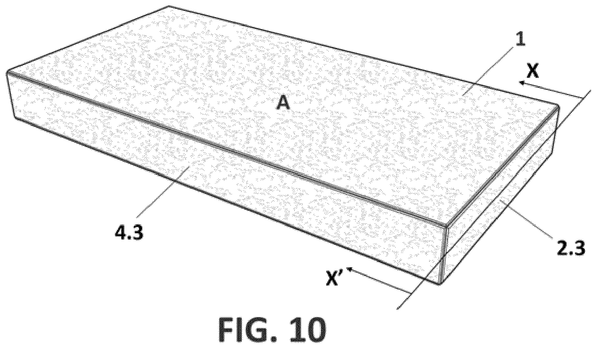

In the module, the first end edge (2.4) of the first side batten (2) and the first end edge (4.4) of the first front batten (4) are beveled at substantially complementary angles and attached to one another, with the longitudinal direction of said battens forming an approximate angle of 90°, with the outer face (2.3) of the first side batten (2) being substantially perpendicular to the outer face (4.3) of the first front batten (4). Figures 9A and 10 show this arrangement. Preferably, the first end edge (2.4) of the first side batten (2) and the first end edge (4.4) of the first front batten (4) are beveled at about 45° in the plane formed by the longitudinal direction and the direction of the thickness of the corresponding batten.

The first end edge (3.4) of the second side batten (3) and the first end edge (5.4) of the second front batten (5) are beveled at substantially complementary angles and attached to one another, with the longitudinal directions of said battens forming an approximate angle of 90°, and the outer face (3.3) of the second side batten (3) being substantially coplanar with the outer face (5.3) of the second front batten (5). Furthermore, in the preferred embodiment of the module shown in the figures, the outer face (3.3) of the second side batten (3) and the outer face (5.3) of the second front batten (5), which are substantially coplanar with one another, are also substantially coplanar with the lower surface (B) of the board (1). Figures 7 and 9A show this arrangement. Preferably, the first end edge (3.4) of the second side batten (3) and the first end edge (5.4) of the second front batten (5) are beveled at about 45° in the plane formed by the longitudinal direction and the width of the corresponding batten.

In the embodiment shown in Figures 1 to 10, the board comprises a second beveled side edge (1.3) and the module comprises a second pair of side battens (6, 7). The angle α₁ formed between the plane containing the second side edge (1.3) of the board and the plane containing the upper face (A) of the board (1) has been identified in Figure 9B. The second pair of side battens (6, 7) comprises a third side batten (6) and a fourth side batten (7). The third side batten (6) comprises a first longitudinal edge, a second longitudinal edge, an outer face (6.3), a first end edge (6.4), and a second end edge (6.5). The fourth side batten (7) comprises a first longitudinal edge, a second longitudinal edge, an outer face (7.3), a first end edge (7.4), and a second end edge (7.5).

The second longitudinal edge of the third side batten (6) and the first longitudinal edge of the fourth side batten (7) are beveled at substantially complementary angles (β₄, γ₄) and attached to one another. The first longitudinal edge of the third side batten (6) and the second side edge (1.3) of the board (1) are beveled at substantially complementary angles (β₃, α₁) and attached to one another. The second longitudinal edge of the fourth side batten (7) and the second side edge (1.3) of the board (1) are beveled substantially with the same bevel angle (γ₅, α₁) and attached to one another.

Figures 9A and 9B show the third side batten (6) and the fourth side batten (7) attached to the second side edge (1.2) of the board (1). The following is identified in Figure 9B: the angle β₃ formed between the plane containing the first longitudinal edge (6.1) of the third side batten (6) and the plane containing the outer face (6.3) of the third side batten (6); the angle β₄ formed between the plane containing the second longitudinal edge (6.2) of the third side batten (6) and the plane containing the outer face (6.3) of the third side batten (6); the angle γ₄ formed between the plane containing the first longitudinal edge (7.1) of the fourth side batten (7) and the plane containing the outer face (7.3) of the fourth side batten (7); and the angle γ₅ formed between the plane containing the second longitudinal edge (7.2) of the fourth side batten (7) and the plane containing the outer face (7.3) of the fourth side batten (7). In this embodiment, β₃, β₄, γ₄, and γ₅ are substantially 45°, but in other embodiments they may have other values.

The first end edge (6.4) of the third side batten (6) and the second end edge (4.5) of the first front batten (4) are beveled at substantially complementary angles and attached to one another, with the longitudinal direction of said battens forming an approximate angle of 90°, and the outer face (6.3) of the third side batten (6) being substantially perpendicular to the outer face (4.3) of the first front batten (4). This arrangement can be observed In Figure 8. Preferably, the first end edge (6.4) of the third side batten (6) and the second end edge (4.5) of the first front batten (4) are beveled at about 45° in the plane formed by the longitudinal direction and the direction of the thickness of the corresponding batten.

The first end edge (7.4) of the fourth side batten (7) and the second end edge (5.5) of the second front batten (5) are beveled at substantially complementary angles and attached to one another, with the longitudinal direction of said battens forming an approximate angle of 90°, and the outer face (7.3) of the fourth side batten (7) being substantially coplanar with the outer face (5.3) of the second front batten (5). Furthermore, in the preferred embodiment of the module shown in the figures, the outer face (7.3) of the fourth side batten (7) and the outer face (5.3) of the second front batten (5), which are substantially coplanar with one another, are also substantially coplanar with the lower surface (B) of the board (1). This arrangement is seen in Figure 9A. Preferably, the first end edge (7.4) of the fourth side batten (7) and the second end edge (5.5) of the second front batten (5) are beveled at about 45° in the plane formed by the longitudinal direction and the direction of the width of the corresponding batten. Figure 8 shows the arrangement of the first pair of front battens (4, 5) and the second pair of side battens (6, 7) in a situation in which the module is partially assembled.

In the shown embodiment of the module, the second end edge (2.5) of the first side batten (2), the second end edge (3.5) of the second side batten (3), the second end edge (6.5) of the third side batten (6), and the second end edge (7.5) of the fourth side batten (7) are substantially perpendicular to the longitudinal direction of the corresponding batten and substantially coplanar with the second front edge (1.4) of the board, as seen in Figure 9A.

Although the board comprises two beveled side edges and the module comprises two pairs of side battens attached in said beveled side edges in the embodiment of Figures 1 to 10, in other embodiments the board may have a single beveled side edge and a single pair of side battens attached to said beveled side edge.

Though not shown in the figures, the module may include a second pair of front battens and a second beveled front edge in the board. In this embodiment, the second pair of front battens comprises a third front batten and a fourth front batten. The third front batten comprises a first longitudinal edge, a second longitudinal edge, an outer face, a first end edge, and a second end edge. The fourth front batten comprises a first longitudinal edge, a second longitudinal edge, an outer face, a first end edge, and a second end edge.

The second longitudinal edge of the third front batten and the first longitudinal edge of the fourth front batten are beveled at substantially complementary angles and attached to one another. The first longitudinal edge of the third front batten and the second front edge of the board are beveled at substantially complementary angles and attached to one another. The second longitudinal edge of the fourth front batten and the second front edge of the board are beveled substantially with the same bevel angle and attached to one another.

The second end edge of the first side batten and the first end edge of the third front batten are beveled at substantially complementary angles and attached to one another such that the longitudinal directions of the first side batten and of the third front batten are substantially perpendicular and the outer face of the first side batten is substantially perpendicular to the outer face of the third front batten.

The second end edge of the second side batten and the first end edge of the fourth front batten are beveled at substantially complementary angles and attached to one another such that the longitudinal directions of the second side batten and of the fourth front batten are substantially perpendicular, and the outer face of the second side batten is substantially coplanar with the outer face of the fourth front batten.

In embodiments including a second pair of side battens and a second pair of front battens, the second end edge of the third side batten and the second end edge of the third front batten are beveled at substantially complementary angles and attached to one another, with the longitudinal directions of said battens forming an approximate angle of 90°, and the outer face of the third side batten being substantially perpendicular to the outer face of the third front batten. Preferably, the second end edge of the third side batten and the second end edge of the third front batten are beveled at about 45° in the plane formed by the longitudinal direction and the direction of the thickness of the corresponding batten. Furthermore, the second end edge of the fourth side batten and the second end edge of the fourth front batten are beveled at substantially complementary angles and attached to one another, with the longitudinal directions of said battens forming an approximate angle of 90°, and the outer face of the fourth side batten being substantially coplanar with the outer face of the fourth front batten. Preferably, the second end edge of the fourth side batten and the second end edge of the fourth front batten are beveled at about 45° in the plane formed by the longitudinal direction and the direction of the width of the corresponding batten.

Preferably, in this embodiment, the outer faces of the second side batten, the second front batten, the fourth side batten, and the fourth side batten are substantially coplanar, and more preferably also coplanar with the lower surface of the board, such that they form a continuity in the lower surface of the module.

In preferred embodiments, the side and front battens are laminated battens comprising a covering layer and a supporting layer. The covering layers (3.10, 5.10) and supporting layers (3.20, 5.20) of the second side batten (3) and the second front batten (5) are identified in Figure 7.

In the board (1), the covering layer (1.10) is preferably thinner than the supporting layer (1.20). Preferably, the thickness of the covering layer (1.10) of the board (1) is comprised between 2 and 10 mm, and more preferably between 3 and 8 mm. Preferably, the thickness of the supporting layer (1.20) of the board (1) is comprised between 10 and 40 mm, and more preferably between 15 and 35 mm. In the case of the battens, preferably, the thickness of the covering layer (3.10, 5.10) is comprised between 2 and 10 mm, and more preferably between 3 and 8 mm, and the thickness of the supporting layer (3.20, 5.20) is comprised between 5 and 20 mm, and more preferably between 7 and 17 mm.

In one embodiment, the materials of the laminated board and the laminated battens are the same. This allows obtaining the board and the battens by means of cutting one and the same initial laminated panel.

In one embodiment, the material of the covering layer of the laminated battens is the same material as that of the covering layer of the laminated board. In this embodiment, the material of the supporting layer of the laminated battens may be the same as or different from the material of the supporting layer of the laminated board; in particular, the supporting layer of the laminated battens and the supporting layer of the laminated board may differ in terms of materials in the presence of a reinforcement mesh and/or an embellishing sheet in the supporting layer of the board which is not present in the supporting layer of the laminated battens. If the reinforcement mesh and/or the embellishing sheet are present on the lower face of the supporting layer, it is also possible in this embodiment to obtain the board and the battens by means of cutting one and the same initial laminated panel, providing the battens with a thickness smaller than the thickness of the board, such that the area of the supporting layer containing the reinforcement mesh and/or the embellishing sheet which remains on the board is eliminated from the battens.

The battens can be attached to the board and to one another by means of any known method. Preferably, the battens are adhered by means of an adhesive, such as an epoxy adhesive or a polyurethane-based adhesive, by means of physical anchoring, or by heat sealing.

For use thereof as a work surface, such as a (kitchen or bathroom) worktop, counter, top board of furniture, and similar applications, the module preferably has a rectangular shape. Preferably, the length of the module is comprised between 0.5 and 3.5 meters, more preferably between 1.0 and 3.2 meters, and even more preferably between 1.5 and 3.0 meters. Preferably, the width of the module is comprised between 0.4 and 0.7 m, and more preferably between 0.5 and 0.65 m. Preferably, the thickness of the module is comprised between 15 and 45 mm, and more preferably between 20 and 40 mm.

### Method of manufacturing a module

In a second inventive aspect, the invention proposes a method of manufacturing a module according to the first inventive aspect. The method comprises the following steps:
a) providing a laminated board (1) comprising a covering layer (1.10) and a supporting layer (1.20), wherein the covering layer (1.10) defines an upper surface (A) and the supporting layer (1.20) defines a lower surface (B); and wherein the board (1) comprises a first side edge (1.1) and a first front edge (1.2), both beveled such that the upper surface (A) of the board is larger than the lower surface (B) of the board;
b) providing a first side batten (2) and a second side batten (3); the first side batten (2) comprising a first longitudinal edge (2.1) and a second longitudinal edge (2.2), an outer face (2.3), and a first end edge (2.4) and a second end edge (2.5); the second side batten (3) comprising a first longitudinal edge (3.1) and a second longitudinal edge (3.2), an outer face (3.3), and a first end edge (3.4) and a second end edge (3.5); wherein the second longitudinal edge (2.2) of the first side batten (2) and the first longitudinal edge (3.1) of the second side batten (3) are beveled at substantially complementary angles; wherein the first longitudinal edge (2.1) of the first side batten (2) and the first side edge (1.1) of the board (1) are beveled at substantially complementary angles; and wherein the second longitudinal edge (3.2) of the second side batten (3) and the first side edge (1.1) of the board (1) are beveled substantially with the same bevel angle;
c) providing a first front batten (4) and a second front batten (5); the first front batten (4) comprising a first longitudinal edge (4.1) and a second longitudinal edge (4.2), an outer face (4.3), and a first end edge (4.4) and a second end edge (4.5); the second front batten (5) comprising a first longitudinal edge (5.1) and a second longitudinal edge (5.2), an outer face (5.3), and a first end edge (5.4) and a second end edge (5.5); wherein the second longitudinal edge (4.2) of the first front batten (4) and the first longitudinal edge (5.1) of the second front batten (5) are beveled at substantially complementary angles; wherein the first longitudinal edge (4.1) of the first front batten (4) and the first front edge (1.2) of the board (1) are beveled at substantially complementary angles; and wherein the second longitudinal edge (5.2) of the second front batten (5) and the first front edge (1.2) of the board (1) are beveled substantially with the same bevel angle;
d) attaching the second longitudinal edge (2.2) of the first side batten (2) and the first longitudinal edge (3.1) of the second side batten (3);
e) attaching the first longitudinal edge (2.1) of the first side batten (2) and the first side edge (1.1) of the board (1);
f) attaching the second longitudinal edge (3.2) of the second side batten (3) and the first side edge (1.1) of the board (1);
g) attaching the second longitudinal edge (4.2) of the first front batten (4) and the first longitudinal edge (5.1) of the second front batten (5);
h) attaching the first longitudinal edge (4.1) of the first front batten (4) and the first front edge (1.2) of the board (1);
i) attaching the second longitudinal edge (5.2) of the second front batten (5) and the first front edge (1.2) of the board (1).

In one embodiment, the first end edge (2.4) of the first side batten (2) and the first end edge (4.4) of the first front batten (4) are beveled at substantially complementary angles; and the first end edge (3.4) of the second side batten (3) and the first end edge (5.4) of the second front batten (5) are beveled at substantially complementary angles. In this embodiment, the method additionally comprises the following steps:
j) attaching the first end edge (2.4) of the first side batten (2) and the first end edge (4.4) of the first front batten (4) such that the longitudinal directions of the first side batten (2) and of the first front batten (4) are substantially perpendicular and the outer face (2.3) of the first side batten (2) is substantially perpendicular to the outer face (4.3) of the first front batten (4);
k) attaching the first end edge (3.4) of the second side batten (3) and the first end edge (5.4) of the second front batten (5) such that the longitudinal directions of the second side batten (3) and of the second front batten (5) are substantially perpendicular, and the outer face (3.3) of the second side batten (3) is substantially coplanar with the outer face (5.3) of the second front batten (5).

The battens of the pair of side battens can be attached to the board individually, or, alternatively, the first side batten and the second side batten can be attached to one another, and the side batten assembly is then attached to the first side edge of the board. Similarly, the battens of the pair of front battens can be attached to the board individually, or, alternatively, the first front batten and the second front batten can be attached to one another, and the front batten assembly is then attached to the first front edge of the board.

The attachment steps can be performed by means of using an adhesive or any other attachment system.

Preferably, both the board (1) and the battens (2, 3, 4, 5) have one and the same configuration of layers, at least in the part closer to the external part of the covering layer. In this case, both the laminated board and the laminated side and front battens can all be obtained from one and the same initial laminated panel. Advantageously, this significantly simplifies module manufacture and considerably reduces waste generation.

In one embodiment, in an initial step, a supporting layer is attached to a covering layer to produce an initial laminated panel with a desired thickness and with a length and width greater than the length and width of the board. The thickness of the initial laminated panel will be the desired thickness of the laminated board. By means of a cutting tool, both the laminated board with the beveled edges, and the side battens and front battens, are cut out from said initial laminated panel. The cuts can be made at suitable angles to produce the described bevels or the cuts can be made at other angles, for example, at right angles, and beveling is then performed. Once the laminated board and the side and front battens are obtained with the beveled edges, the step of attaching the battens to the board proceeds as described.

The method may include one or more additional steps for cutting, finishing, and/or working the laminated module to adapt it to its final application. Therefore, the method may include a step of cutting the module to the size required by the application, a step for chamfering the borders of the module, and/or a step for cutting out at least one hole for the insertion of an element such as a sink or a cooking plate. Advantageously, these steps can be performed with conventional cutting tools in woodworking or carpentry.

### Example of a laminated module according to the invention and of the method of manufacturing the same

An example of a laminated module according to the invention and of the method of manufacturing the same are described below. In this example, an initial laminated panel is obtained by means of adhering, with a commercial epoxy resin, a commercial polyisocyanurate (PIR) foam slab having a density of 60 kg/m³, a length of 3.2 m, and a width of 0.75 m, to the lower ('non-visible') face of a commercial Dekton^{®} slab with a thickness of 4 mm and a density of 2500 kg/m³ previously reinforced with a glass mesh, and with the same length and width as the foam slab. The final thickness of the initial laminated panel is 30 mm. The PIR foam slab will form the supporting layer of the laminate, whereas the reinforced Dekton^{®} slab will form the covering layer of the laminated module.

Other materials for both the supporting layer and the covering layer are possible, without departing from the inventive concept of the present invention. Therefore, the supporting layer can be made up of polymer materials, thermoplastic materials, or thermosetting materials, that are foamed or not foamed, and reinforced (for example, with fillers and/or fibers) or not reinforced, such as polyurethane, polystyrene (extruded or expanded), polyethylene, polypropylene, PVC, among others. Alternatively, the supporting layer can be made up of wooden materials, such as compacted fiber boards or wood particle boards, such as MDF. Other possible materials for the supporting layer are those based on inorganic materials, such as concrete, cements, geopolymers, gypsums, etc., which are porous or non-porous, and reinforced with fillers and/or fibers or not reinforced. The supporting layer can be formed by a laminate having several sheets of materials with different characteristics. Therefore, for example, the supporting layer can be formed by a laminate with a polymeric foam laminated to a layer of fiber mesh, a metal sheet, or a plastic sheet.

In terms of the covering layer, any material used today as a work surface, such as worktops, can be used. Preferably, a material providing the required mechanical strength and chemical resistance, and preferably having good esthetic qualities (for example, relative to color patterns, shine, and/or type of surface finishing) is selected for the covering layer for this application. The examples of materials which can be used for the covering layer are ceramic materials obtained from mineral sintering, such as porcelain materials, natural stones (for example, granite or marble), and artificial stones of the composite type, such as quartz or bauxite composites. The use of high-density wood laminates or solid wood boards as the covering layer can also be envisaged.

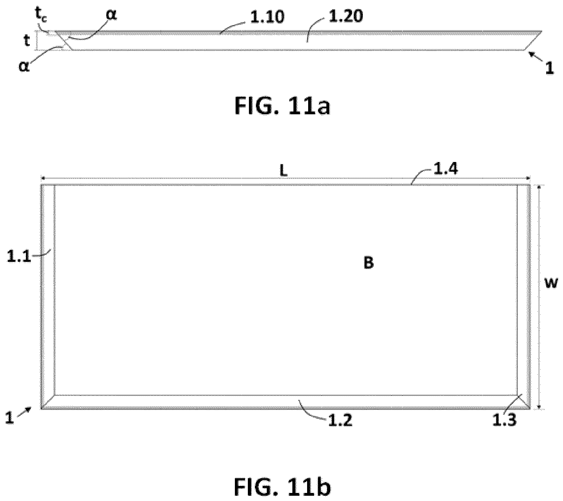

According to this example, a rectangular laminated board (1) with a maximum length L = 3.0 m and a maximum width w = 0.6 m is cut from the initial laminated panel using a precision cutting tool. The cuts for the first side edge (1.1) and the second side edge (1.3) and for the first front edge (1.2) of the laminated board are made at an angle α = 45°, generating a larger surface on the upper (or useful) face (A) of the board, defined by the covering layer (1.10), and a smaller surface on the lower face (B) of the board (1), away from the covering layer. Figures 11a and 11b schematically show the configuration of the board (1), with the covering layer (1.10) depicted in grey and the supporting layer (1.20) depicted in white, in profile and bottom views, respectively. The thickness of the board (1) and the thickness of the covering layer (1.10) are identified in the figure as t and t_{c}, respectively. The angle α between the plane containing the upper face (A) and the plane containing the first side edge (1.1) are also identified in the figure. Though not depicted, the plane containing the second side edge (1.3) and the plane containing the first front edge (1.2) also form an angle α with the plane containing the upper face (A).

Four side battens are cut from the same initial laminated panel. The side battens are cut with a length (L_{L}) approximately equal to the width (w) of the laminated board, that is, 0.6 m, and with a maximum width (w_{L}) approximately equal to the thickness (t) of the board, that is, w_{L}=t = 30 mm. The side battens are cut such that they are beveled at an approximate angle of 45° along their length to configure the beveled longitudinal edges (2.1, 2.2, 3.1, 3.2, 6.1, 6.2, 7.1, 7.2), such that the widest face of the batten which defines the outer face of the batten is the one corresponding to the covering layer (Dekton^{®} in this example) and the maximum thickness (t_{L}) of the batten is about half the thickness (t) of the board, that is, 15 mm. The longitudinal cuts are made to form an approximate angle of 45° on each side of the batten, in the plane formed by the width (w_{L}) and the thickness (t_{L}) of the side battens. Therefore, the plane containing the outer face and the plane containing the longitudinal edge form an approximate angle of 45° on each side of the batten.

The four side battens include a first side batten (2), a second side batten (3), a third side batten (6), and a fourth side batten (7).

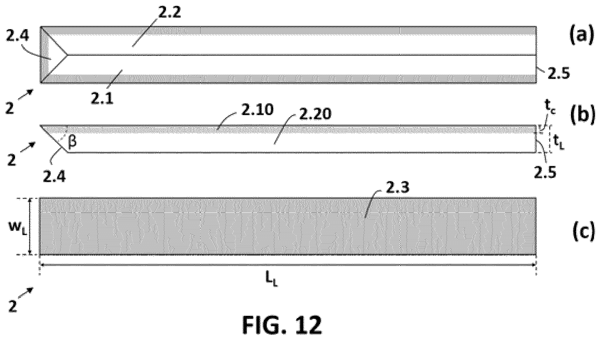

A first end of the first side batten (2) and of the third side batten (6) is cut at an approximate angle β = 45° in the plane formed by the direction of the length (L_{L}) of the batten and the thickness (t_{L}) thereof, as schematically illustrated in Figure 12b. Said end forms a beveled end edge (2.4), in which the plane containing the end edge (2.4) forms an angle β with the plane containing the outer face (2.3). Figures 12a to 12c show, respectively, views of the first side batten (2) from the part of the supporting layer (2.20), profile views from the second longitudinal edge (2.2) and from the outer face (2.3). In the embodiment shown in Figures 12a to 12c, the second end (2.5) of the first side batten (2) is cut at an angle approximately perpendicular to the longitudinal direction of the first side batten (2). Though not depicted in the figure, the second end (6.5) of the third side batten (6) is also cut at an angle approximately perpendicular to the longitudinal direction of the third side batten (6).

In Figures 12 to 16, the parts depicted in white correspond to the supporting layer (2.20, 3.20, 4.20, 5.20, 7.20) and the parts depicted in grey correspond to the covering layer (2.10, 3.10, 4.10, 5.10, 7.10).

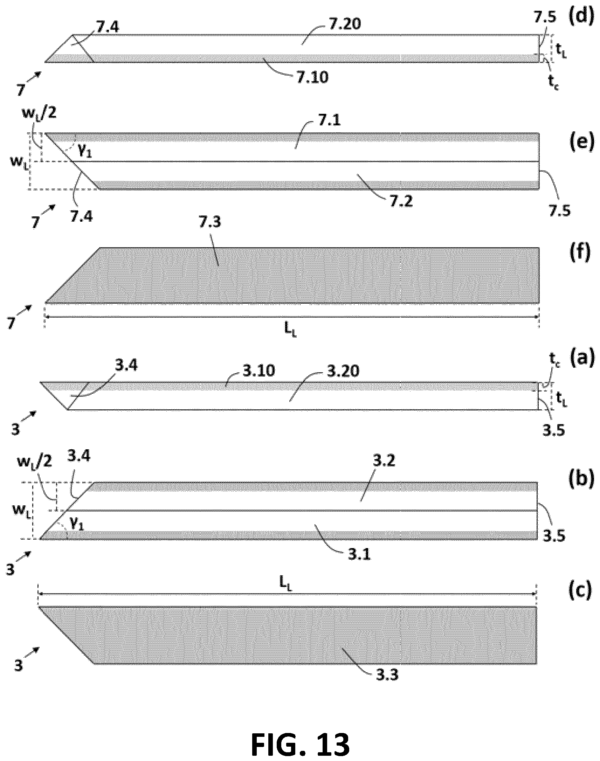

Moreover, as schematically shown in Figures 13a to 13f, a first end of the second side batten (3) and of the fourth side batten(7) is cut at an approximate angle γ₁ = 45° in the plane formed by the length and the width of the batten. The cut ends thereby form beveled end edges (3.4, 7.4). The cut is made such that the plane containing the end edge (3.4, 7.4) forms an approximate angle of 90° with the plane containing the outer face (3.3, 7.3) of the batten, and where the area of the first longitudinal edge (3.1, 7.1) thereof is larger than the area of the second longitudinal edge (3.2, 7.2) thereof. Furthermore, the cut is made such that the projections in the direction of the thickness of the second side batten (3) and of the fourth side batten (7) form a mirror image with respect to one another. These figures show, respectively: schematic views (a), (b), and (c) of the second side batten (3), where (a) is the profile view from the second longitudinal edge (3.2), (b) is the view from the part of the supporting layer (3.20), and (c) is the view from the outer face (2.3), and schematic views (d), (e), and (f) of the fourth side batten (7), where (d) is the profile view from the second longitudinal edge (7.2), (e) is the view from the part of the supporting layer (7.20), and (f) is the view from the outer face (7.3). In the embodiment shown in Figures 13a to 13f, the second end (3.5, 7.5) of the second side batten (3) and of the fourth side batten (7) is cut at an angle approximately perpendicular to the longitudinal direction of each side batten (3, 7).

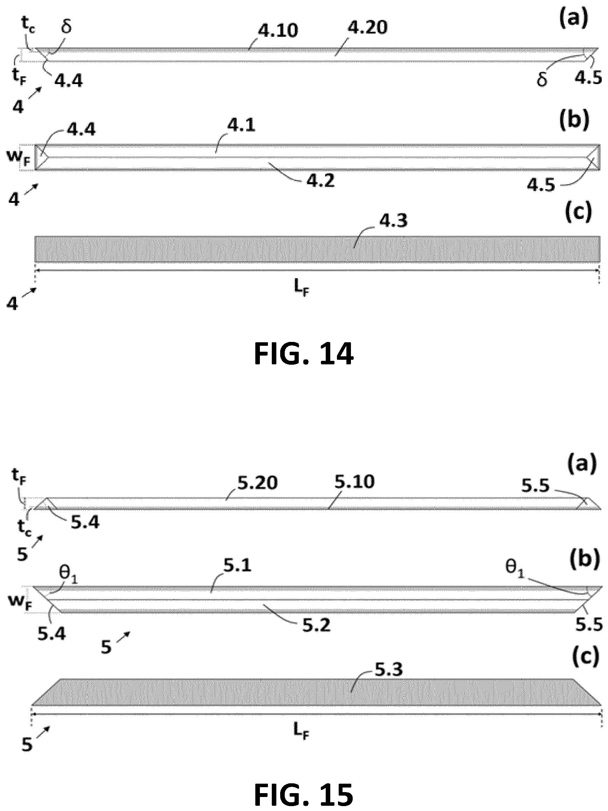

Two front battens (4, 5) are additionally cut from the same initial laminated panel (Figures 14 and 15). The maximum length (L_{F}) of the front battens is approximately equal to the length (L) of the board, that is, 3.0 m. The two front battens (4, 5) are cut such that they are beveled at 45° along their length to form the longitudinal edges (4.1, 4.2, 5.1, 5.2), such that the widest face of each batten which defines the outer face of the batten is the one corresponding to the covering layer (4.10, 5.10), and the maximum thickness (t_{F}) thereof is about half the thickness (t) of the board, that is, 15 mm. The longitudinal cuts are made at approximate angles of 45° on each longitudinal edge of the batten, in the plane formed by the width (w_{F}) and the thickness (t_{F}) of the front battens (4, 5). Therefore, the plane containing the outer face and the plane containing the longitudinal edge form an approximate angle of 45° on each side of the batten.

The two front battens are a first front batten (4) and a second front batten (5). The two ends of the first front batten (4) are cut at an approximate angle δ = 45° in the plane formed by the direction of the length (L_{F}) of the batten and the thickness (t_{F}) thereof, as schematically illustrated in Figure 14a. The first end edge (4.4) and the second end edge (4.5), visible in Figure 14b, are thus formed. The plane containing each end edge (4.4, 4.5) forms an angle δ with the plane containing the outer face (4.3). Figures 14a to 14c show, respectively: schematic views of the first front batten (4), where (a) is the profile view, (b) is the view from the part of the supporting layer (4.20), and (c) is the view from the outer face (4.3).

Moreover, the two ends of the second front batten (5) are cut at approximate angles θ₁ = 45° in the plane formed by the length (L_{F}) and the width (w_{F}) of the batten. The first end edge (5.4) and the second end edge (5.5) of the second front batten (5) are thus formed. The cut is made such that the plane containing the end edge (5.4, 5.5) forms an approximate angle of 90° with the plane containing the outer face (5.3) of the batten, and where the area of the first longitudinal edge (5.1) is larger than the area of the second longitudinal edge (5.2). This is illustrated in Figures 15a to 15c showing, respectively: schematic views of the second front batten (5), where (a) is the profile view from the second longitudinal edge (5.2), (b) is the view from the part of the supporting layer (5.20), and (c) is the view from the outer face (5.3).

In this example, the module is formed by the seven mentioned parts, i.e., the laminated board (1), the first side batten (2), the second side batten (3), the third side batten (6), the fourth side batten (7), the first front batten (4), and the second front batten (5). In this example, the second front edge (1.4) of the board, which will form a front edge of the module is cut at 90°, without battens adhered thereto, and with the supporting layer (1.20) exposed. In a situation in which the module is used, this second front edge (1.4) will be concealed facing a wall or a piece of furniture, and, therefore, the reinforcement or a more esthetic finishing thereof is not necessary. In other embodiments, the module may include a different number of pairs of battens, for example a single pair of side battens attached to a side edge of the board and a single pair of front battens attached to a front edge of the board, or two pairs of front battens and two pairs of side battens attached, respectively, to the side and front edges of the board. Furthermore, although the bevel angles are about 45° in this example, other angle values are possible for the different cuts, and the same bevel angle for all the battens is not necessary either.

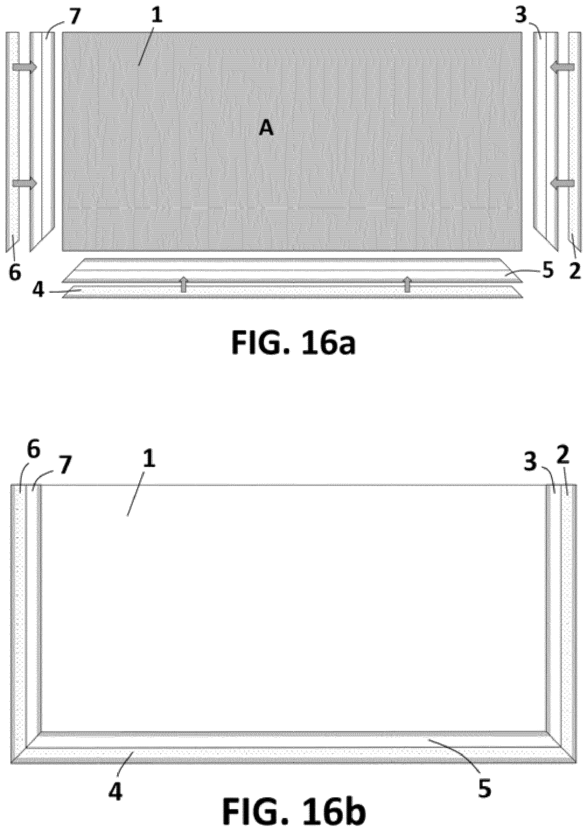

For the construction of the module, in this example, the first side batten (2) and the second side batten (3) are attached to one another, the third side batten (6) and the fourth side batten (7) are attached to one another, and the first front batten (4) and the second front batten (5) are attached to one another. In this example, the attachment is carried out with an adhesive. After the formation of the three batten assemblies (two side batten assemblies and one front batten assembly), the batten assemblies are attached with an adhesive to the beveled side and front edges, respectively, of the board. Figures 16a and 16b show, by way of example, the position of the battens with respect to the board before and after the attachment. The positioning of battens (2, 4, 6) in relation to other battens (3, 5, 7) is indicated with arrows in Figure 16a. Figure 16b shows the battens attached to one another and to the board (1). Figure 16b shows a cross-section in direction X-X' indicated in Figure 10. To more clearly distinguish the battens in Figures 16a and 16b, the supporting layers of the first side batten (2), the third side batten (6), and the first front batten (4) are depicted with a pattern of dots.

Once the laminated board (1) has been attached to the batten assemblies, the covering layer (1.10) of the board (1) forms the upper surface (A) of the module. The covering layers (2.10, 6.10) of the first side batten (2) and the third side batten (6) form the side edges of the module, whereas the covering layer (4.10) of the first front batten (4) forms a front edge of the module. The covering layers (3.10, 7.10, 5.10) of the second side batten (3), the fourth side batten (7), and the second front batten (5) form the lower surface of the module in the proximity of the side edges and the front edge. The rest of the lower surface of the module is formed by the lower surface (B) of the board (1). In the embodiment depicted in the figures, these covering layers (3.10, 7.10, 5.10) of the second and fourth side battens, and the second front batten, are substantially coplanar, and they are also coplanar with the lower surface of the board.

The invention is not limited to this described way of manufacturing the module, but rather another order of steps, or the performance of two or more steps simultaneously, is possible without departing from the inventive concept. Therefore, for example, it is possible to gradually attach the different battens individually to the board with an adhesive.

The laminated module that is obtained as described has an improved esthetic aspect, as the edges and the lower part in the proximity of the edges are of the same material as the upper surface or useful surface of the module. Furthermore, the edges are more resistant to peeling, impacts, and mechanical or chemical aggressions than the previously known modules. Additionally, the module having a part of the covering layer (3.10, 5.10, 7.10) on its lower face in the proximity of the edges gives it additional resistance in that area, which is often subjected to mechanical or chemical aggressions as it is exposed in the lower part of a kitchen worktop or the like, and/or as it constitutes the area most affected by the vapors of home appliances (ovens, dishwashers) installed below the worktop.

The module of the invention is much more lightweight than monolayer stone or ceramic boards of a similar size and may be cut or produced with conventional carpentry tools, where specific marble working tools are not required. Furthermore, since the edges are better protected, it better withstands transport and minor impacts in the area of the edges.

### Bending strength testing

By way of experiment, a module was prepared as described in the example. An initial laminated panel having a thickness t = 30 mm was prepared with the same composition of layers described above, i.e., with a covering layer formed by a Dekton^{®} sheet having a thickness t_{c} = 4 mm, reinforced with a glass fiber mesh, and a PIR foam supporting layer. One board, two pairs of side battens, and one pair of front battens were cut from that initial panel, and a module according to the invention was manufactured as described. Moreover, by way of comparison, a second board of the same dimensions as the previous board, but with the edges cut at 90° with respect to the plane formed by the length and the width of the board, was cut from the same initial panel. To prepare a comparative module with the second board, reinforced Dekton^{®} strips having a thickness of 4 mm were adhered to each of the four edges of the second board using an adhesive.

A hole, like those made for inserting a glass ceramic plate in a worktop, is made in the two modules thus constructed. The hole had dimensions of 50 x 50 cm and was made at a distance of 5 cm from the front edge of each module.

A bending strength test of the two modules was performed by placing, in both cases, different increasing weights in the area of the module located between the front edge of the module and the hole. In the case of the module according to the invention, the edge and the module were capable of supporting 75 kg before showing small cracks. On the other hand, the comparative module with the edges finished at an angle of 90° with an adhered Dekton^{®} strip showed cracks when 30 kg were applied and broke when a weight of 70 kg was applied. As a result of the experiment, it can be concluded that the modules according to the invention show higher mechanical strength.

## Claims

1. A laminated module comprising a laminated board (1), a first pair of side battens (2, 3), and a first pair of front battens (4, 5);
wherein the board (1) comprises a covering layer (1.10) and a supporting layer (1.20), wherein the covering layer (1.10) defines an upper surface (A) and the supporting layer (1.20) defines a lower surface (B), and wherein the board (1) comprises a first side edge (1.1) and a first front edge (1.2), both beveled such that the upper surface (A) of the board is larger than the lower surface (B) of the board;
wherein the first pair of side battens (2, 3) comprises a first side batten (2) and a second side batten (3); the first side batten (2) comprising a first longitudinal edge (2.1) and a second longitudinal edge (2.2), an outer face (2.3), and a first end edge (2.4) and a second end edge (2.5); the second side batten (3) comprising a first longitudinal edge (3.1) and a second longitudinal edge (3.2), an outer face (3.3), and a first end edge (3.4) and a second end edge (3.5);
wherein the first pair of front battens (4, 5) comprises a first front batten (4) and a second front batten (5); the first front batten (4) comprising a first longitudinal edge (4.1) and a second longitudinal edge (4.2), an outer face (4.3), and a first end edge (4.4) and a second end edge (4.5); the second front batten (5) comprising a first longitudinal edge (5.1) and a second longitudinal edge (5.2), an outer face (5.3), and a first end edge (5.4) and a second end edge (5.5);
wherein:
the second longitudinal edge (2.2) of the first side batten (2) and the first longitudinal edge (3.1) of the second side batten (3) are beveled at substantially complementary angles and attached to one another;
the first longitudinal edge (2.1) of the first side batten (2) and the first side edge (1.1) of the board (1) are beveled at substantially complementary angles and attached to one another;
the second longitudinal edge (3.2) of the second side batten (3) and the first side edge (1.1) of the board (1) are beveled substantially with the same bevel angle and attached to one another;
the second longitudinal edge (4.2) of the first front batten (4) and the first longitudinal edge (5.1) of the second front batten (5) are beveled at substantially complementary angles and attached to one another;
the first longitudinal edge (4.1) of the first front batten (4) and the first front edge (1.2) of the board (1) are beveled at substantially complementary angles and attached to one another;
the second longitudinal edge (5.2) of the second front batten (5) and the first front edge (1.2) of the board (1) are beveled substantially with the same bevel angle and attached to one another;
the first end edge (2.4) of the first side batten (2) and the first end edge (4.4) of the first front batten (4) are beveled at substantially complementary angles and attached to one another such that the longitudinal directions of the first side batten (2) and of the first front batten (4) are substantially perpendicular and the outer face (2.3) of the first side batten (2) is substantially perpendicular to the outer face (4.3) of the first front batten (4); and
the first end edge (3.4) of the second side batten (3) and the first end edge (5.4) of the second front batten (5) are beveled at substantially complementary angles and attached to one another such that the longitudinal directions of the second side batten (3) and of the second front batten (5) are substantially perpendicular, and the outer face (3.3) of the second side batten (3) is substantially coplanar with the outer face (5.3) of the second front batten (5).

2. The module according to the preceding claim, wherein the first side edge (1.1) and/or the first front edge (1.2) of the board (1) is beveled with a bevel angle of between 40° and 50°, preferably between 43° and 47°.

3. The module according to any of the preceding claims, wherein the second longitudinal edge (2.2) of the first side batten (2) and/or the second longitudinal edge (4.2) of the first front batten (4) is beveled with a bevel angle of between 40° and 50°, preferably between 43° and 47°.

4. The module according to any of the preceding claims, wherein the first end edge (2.4) of the first side batten (2) and/or the first end edge (3.4) of the second side batten (3) is beveled with a bevel angle of between 40° and 50°, preferably between 43° and 47°.

5. The module according to any of the preceding claims, wherein:
the first side batten (2) and the second side batten (3) have a length substantially equal to the width of the board (1), a width substantially equal to the thickness of the board (1), and a thickness substantially equal to half the thickness of the board (1); and/or
the first front batten (4) and the second front batten (5) have a length substantially equal to the length of the board (1), a width substantially equal to the thickness of the board (1), and a thickness substantially equal to half the thickness of the board (1).

6. The module according to any of the preceding claims, wherein at least one of the first side batten (2), second side batten (3), first front batten (4), and second front batten (5) is a laminated batten comprising a covering layer (3.10, 5.10) and a supporting layer (3.20, 5.20).

7. The module according to the preceding claim, wherein:
the thickness of the covering layer of the laminated batten (3.10, 5.10) is comprised between 2 and 10 mm, more preferably between 3 and 8 mm; and/or
the thickness of the supporting layer (3.20, 5.20) of the laminated batten is comprised between 5 and 20 mm, more preferably between 7 and 17 mm.

8. The module according to any of the preceding claims, wherein the covering layer (1.10, 3.10, 5.10) has a thickness smaller than the supporting layer (1.20, 3.20, 5.20).

9. The module according to any of the preceding claims, wherein:
the thickness of the covering layer (1.10) of the board (1) is comprised between 2 and 10 mm, more preferably between 3 and 8 mm; and/or
the thickness of the supporting layer (1.20) of the board (1) is comprised between 10 and 40 mm, more preferably between 15 and 35 mm.

10. The module according to any of the preceding claims, wherein the board (1) comprises a second beveled side edge (1.3) and the module comprises a second pair of side battens (6, 7); wherein the second pair of side battens (6, 7) comprises a third side batten (6) and a fourth side batten (7); the third side batten (6) comprising a first longitudinal edge and a second longitudinal edge, an outer face (6.3), and a first end edge (6.4) and a second end edge (6.5); the fourth side batten (7) comprising a first longitudinal edge (7.4) and a second longitudinal edge (7.5), an outer face (7.3), and a first end edge (7.4) and a second end edge (7.5);
wherein:
the second longitudinal edge of the third side batten (6) and the first longitudinal edge of the fourth side batten (7) are beveled at substantially complementary angles and attached to one another;
the first longitudinal edge of the third side batten (6) and the second side edge (1.3) of the board (1) are beveled at substantially complementary angles and attached to one another;
the second longitudinal edge of the fourth side batten (7) and the second side edge (1.3) of the board (1) are beveled substantially with the same bevel angle and attached to one another;
the first end edge (6.4) of the third side batten (6) and the second end edge (4.5) of the first front batten (4) are beveled at substantially complementary angles and attached to one another such that the longitudinal directions of the third side batten (6) and of the first front batten (4) are substantially perpendicular and the outer face of the third side batten (6) is substantially perpendicular to the outer face (4.3) of the first front batten (4); and
the first end edge of the fourth side batten (7) and the second end edge of the second front batten (5) are beveled at substantially complementary angles and attached to one another such that the longitudinal directions of the fourth side batten (7) and of the second front batten (5) are substantially perpendicular, and the outer face of the fourth side batten (7) is substantially coplanar with the outer face (5.3) of the second front batten (5).

11. The module according to any of the preceding claims, wherein the board (1) comprises a second beveled front edge (1.4) and the module comprises a second pair of front battens; wherein the second pair of front battens comprises a third front batten and a fourth front batten; the third front batten comprising a first longitudinal edge and a second longitudinal edge, an outer face, and a first end edge and a second end edge; the fourth front batten comprising a first longitudinal edge and a second longitudinal edge, an outer face, and a first end edge and a second end edge;
wherein:
the second longitudinal edge of the third front batten and the first longitudinal edge of the fourth front batten are beveled at substantially complementary angles and attached to one another;
the first longitudinal edge of the third front batten and the second front edge (1.4) of the board (1) are beveled at substantially complementary angles and attached to one another;
the second longitudinal edge of the fourth front batten and the second front edge (1.4) of the board (1) are beveled substantially with the same bevel angle and attached to one another;
the second end edge of the first side batten (2) and the first end edge of the third front batten are beveled at substantially complementary angles and attached to one another such that the longitudinal directions of the first side batten (2) and of the third front batten are substantially perpendicular and the outer face (2.3) of the first side batten (2) is substantially perpendicular to the outer face of the third front batten; and
the second end edge of the second side batten (3) and the first end edge of the fourth front batten are beveled at substantially complementary angles and attached to one another such that the longitudinal direction of the second side batten (3) and of the fourth front batten are substantially perpendicular, and the outer face (3.3) of the second side batten (3) is substantially coplanar with the outer face of the fourth front batten.

12. Method of manufacturing a module according to any of the preceding claims which comprises the following steps:
a) providing a laminated board (1) comprising a covering layer (1.10) and a supporting layer (1.20), wherein the covering layer (1.10) defines an upper surface (A) and the supporting layer (1.20) defines a lower surface (B); and wherein the board (1) comprises a first side edge (1.1) and a first front edge (1.2), both beveled such that the upper surface (A) of the board is larger than the lower surface (B) of the board;
b) providing a first side batten (2) and a second side batten (3); the first side batten (2) comprising a first longitudinal edge (2.1) and a second longitudinal edge (2.2), an outer face (2.3), and a first end edge (2.4) and a second end edge (2.5); the second side batten (3) comprising a first longitudinal edge (3.1) and a second longitudinal edge (3.2), an outer face (3.3), and a first end edge (3.4) and a second end edge (3.5); wherein the second longitudinal edge (2.2) of the first side batten (2) and the first longitudinal edge (3.1) of the second side batten (3) are beveled at substantially complementary angles; wherein the first longitudinal edge (2.1) of the first side batten (2) and the first side edge (1.1) of the board (1) are beveled at substantially complementary angles; and wherein the second longitudinal edge (3.2) of the second side batten (3) and the first side edge (1.1) of the board (1) are beveled substantially with the same bevel angle;
c) providing a first front batten (4) and a second front batten (5); the first front batten (4) comprising a first longitudinal edge (4.1) and a second longitudinal edge (4.2), an outer face (4.3), and a first end edge (4.4) and a second end edge (4.5); the second front batten (5) comprising a first longitudinal edge (5.1) and a second longitudinal edge (5.2), an outer face (5.3), and a first end edge (5.4) and a second end edge (5.5); wherein the second longitudinal edge (4.2) of the first front batten (4) and the first longitudinal edge (5.1) of the second front batten (5) are beveled at substantially complementary angles; wherein the first longitudinal edge (4.1) of the first front batten (4) and the first front edge (1.2) of the board (1) are beveled at substantially complementary angles; and wherein the second longitudinal edge (5.2) of the second front batten (5) and the first front edge (1.2) of the board (1) are beveled substantially with the same bevel angle;
d) attaching the second longitudinal edge (2.2) of the first side batten (2) and the first longitudinal edge (3.1) of the second side batten (3);
e) attaching the first longitudinal edge (2.1) of the first side batten (2) and the first side edge (1.1) of the board (1);
f) attaching the second longitudinal edge (3.2) of the second side batten (3) and the first side edge (1.1) of the board (1);
g) attaching the second longitudinal edge (4.2) of the first front batten (4) and the first longitudinal edge (5.1) of the second front batten (5);
h) attaching the first longitudinal edge (4.1) of the first front batten (4) and the first front edge (1.2) of the board (1);
i) attaching the second longitudinal edge (5.2) of the second front batten (5) and the first front edge (1.2) of the board (1).

13. The method according to the preceding claim, wherein:
the first end edge (2.4) of the first side batten (2) and the first end edge (4.4) of the first front batten (4) are beveled at substantially complementary angles; and
the first end edge (3.4) of the second side batten (3) and the first end edge (5.4) of the second front batten (5) are beveled at substantially complementary angles;
wherein the method additionally comprises:
j) attaching the first end edge (2.4) of the first side batten (2) and the first end edge (4.4) of the first front batten (4) such that the longitudinal directions of the first side batten (2) and of the first front batten (4) are substantially perpendicular and the outer face (2.3) of the first side batten (2) is substantially perpendicular to the outer face (4.3) of the first front batten (4);
k) attaching the first end edge (3.4) of the second side batten (3) and the first end edge (5.4) of the second front batten (5) such that the longitudinal direction of the second side batten (3) and of the second front batten (5) are substantially perpendicular, and the outer face (3.3) of the second side batten (3) is substantially coplanar with the outer face (5.3) of the second front batten (5).

14. The method according to any of claims 12 to 13, wherein steps a) to c) result from the following earlier steps:
providing a laminated panel; and
cutting the panel to obtain the board (1), the first side batten (2), the second side batten (3), the first front batten (4), and the second front batten (5).

15. The method according to the preceding claim, wherein the step of providing a laminated panel comprises attaching a supporting layer to a covering layer.

## Patentansprüche

1. Laminiertes Modul, das eine laminierte Platte (1), ein erstes Paar Seitenleisten (2, 3) und ein erstes Paar Vorderleisten (4, 5) aufweist;
wobei die Platte (1) eine Deckschicht (1.10) und eine Trägerschicht (1.20) aufweist, wobei die Deckschicht (1.10) eine obere Fläche (A) und die Trägerschicht (1.20) eine untere Fläche (B) definiert, und wobei die Platte (1) eine erste Seitenkante (1.1) und eine erste Vorderkante (1.2) aufweist, die beide so abgeschrägt sind, dass die obere Fläche (A) der Platte größer ist als die untere Fläche (B) der Platte;
wobei das erste Paar Seitenleisten (2, 3) eine erste Seitenleiste (2) und eine zweite Seitenleiste (3) aufweist; wobei die erste Seitenleiste (2) eine erste Längskante (2.1) und eine zweite Längskante (2.2), eine Außenfläche (2.3) und eine erste Endkante (2.4) und eine zweite Endkante (2.5) aufweist; wobei die zweite Seitenleiste (3) eine erste Längskante (3.1) und eine zweite Längskante (3.2), eine Außenfläche (3.3) und eine erste Endkante (3.4) und eine zweite Endkante (3.5) aufweist;
wobei das erste Paar Vorderleisten (4, 5) eine erste Vorderleiste (4) und eine zweite Vorderleiste (5) aufweist; wobei die erste Vorderleiste (4) eine erste Längskante (4.1) und eine zweite Längskante (4.2), eine Außenfläche (4.3), und eine erste Endkante (4.4) und eine zweite Endkante (4.5) aufweist; wobei die zweite Vorderleiste (5) eine erste Längskante (5.1) und eine zweite Längskante (5.2), eine Außenfläche (5.3), und eine erste Endkante (5.4) und eine zweite Endkante (5.5) aufweist;
wobei:
die zweite Längskante (2.2) der ersten Seitenleiste (2) und die erste Längskante (3.1) der zweiten Seitenleiste (3) in im Wesentlichen komplementären Winkeln abgeschrägt und aneinander befestigt sind;
die erste Längskante (2.1) der ersten Seitenleiste (2) und die erste Seitenkante (1.1) der Platte (1) in im Wesentlichen komplementären Winkeln abgeschrägt und aneinander befestigt sind;
die zweite Längskante (3.2) der zweiten Seitenleiste (3) und die erste Seitenkante (1.1) der Platte (1) im Wesentlichen mit demselben Abschrägungswinkel abgeschrägt und aneinander befestigt sind;
die zweite Längskante (4.2) der ersten Vorderleiste (4) und die erste Längskante (5. 1) der zweiten Vorderleiste (5) in im Wesentlichen komplementären Winkeln abgeschrägt und aneinander befestigt sind;
die erste Längskante (4.1) der ersten Vorderleiste (4) und die erste Vorderkante (1.2) der Platte (1) in im Wesentlichen komplementären Winkeln abgeschrägt und aneinander befestigt sind;
die zweite Längskante (5.2) der zweiten Vorderleiste (5) und die erste Vorderkante (1.2) der Platte (1) im Wesentlichen mit demselben Abschrägungswinkel abgeschrägt und aneinander befestigt sind;
die erste Endkante (2.4) der ersten Seitenleiste (2) und die erste Endkante (4.4) der ersten Vorderleiste (4) in im Wesentlichen komplementären Winkeln abgeschrägt und so aneinander befestigt sind, dass die Längsrichtungen der ersten Seitenleiste (2) und der ersten Vorderleiste (4) im Wesentlichen senkrecht sind und die Außenfläche (2.3) der ersten Seitenleiste (2) im Wesentlichen senkrecht zur Außenfläche (4.3) der ersten Vorderleiste (4) ist; und
die erste Endkante (3.4) der zweiten Seitenleiste (3) und die erste Endkante (5.4) der zweiten Vorderleiste (5) in im Wesentlichen komplementären Winkeln abgeschrägt und so aneinander befestigt sind, dass die Längsrichtungen der zweiten Seitenleiste (3) und der zweiten Vorderleiste (5) im Wesentlichen senkrecht sind, und die Außenfläche (3.3) der zweiten Seitenleiste (3) im Wesentlichen koplanar mit der Außenfläche (5.3) der zweiten Vorderleiste (5) ist.

2. Modul nach dem vorhergehenden Anspruch, wobei die erste Seitenkante (1.1) und/oder die erste Vorderkante (1.2) der Platte (1) mit einem Abschrägungswinkel zwischen 40° und 50°, vorzugsweise zwischen 43° und 47°, abgeschrägt ist.

3. Modul nach einem der vorhergehenden Ansprüche, wobei die zweite Längskante (2.2) der ersten Seitenleiste (2) und/oder die zweite Längskante (4.2) der ersten Vorderleiste (4) mit einem Abschrägungswinkel zwischen 40° und 50°, vorzugsweise zwischen 43° und 47°, abgeschrägt ist.

4. Modul nach einem der vorhergehenden Ansprüche, wobei die erste Endkante (2.4) der ersten Seitenleiste (2) und/oder die erste Endkante (3.4) der zweiten Seitenleiste (3) mit einem Abschrägungswinkel zwischen 40° und 50°, vorzugsweise zwischen 43° und 47°, abgeschrägt ist.

5. Modul nach einem der vorhergehenden Ansprüche, wobei:
die erste Seitenleiste (2) und die zweite Seitenleiste (3) eine Länge, die im Wesentlichen der Breite der Platte (1) entspricht, eine Breite, die im Wesentlichen der Dicke der Platte (1) entspricht, und eine Dicke aufweisen, die im Wesentlichen der halben Dicke der Platte (1) entspricht; und/oder
die erste Vorderleiste (4) und die zweite Vorderleiste (5) eine Länge, die im Wesentlichen der Länge der Platte (1) entspricht, eine Breite, die im Wesentlichen der Dicke der Platte (1) entspricht, und eine Dicke aufweisen, die im Wesentlichen der halben Dicke der Platte (1) entspricht.

6. Modul nach einem der vorhergehenden Ansprüche, wobei mindestens eine der ersten Seitenleiste (2), der zweiten Seitenleiste (3), der ersten Vorderleiste (4) und der zweiten Vorderleiste (5) eine laminierte Leiste ist, die eine Deckschicht (3.10, 5.10) und eine Trägerschicht (3.20, 5.20) aufweist.

7. Modul nach dem vorhergehenden Anspruch, wobei:
die Dicke der Deckschicht der laminierten Leiste (3.10, 5.10) zwischen 2 und 10 mm, vorzugsweise zwischen 3 und 8 mm, liegt; und/oder
die Dicke der Trägerschicht (3.20, 5.20) der laminierten Leiste zwischen 5 und 20 mm, vorzugsweise zwischen 7 und 17 mm, liegt.

8. Modul nach einem der vorhergehenden Ansprüche, wobei die Deckschicht (1.10, 3.10, 5.10) eine geringere Dicke als die Trägerschicht (1.20, 3.20, 5.20) aufweist.

9. Modul nach einem der vorhergehenden Ansprüche, wobei:
die Dicke der Deckschicht (1.10) der Platte (1) zwischen 2 und 10 mm, vorzugsweise zwischen 3 und 8 mm, liegt; und/oder
die Dicke der Trägerschicht (1.20) der Platte (1) zwischen 10 und 40 mm, vorzugsweise zwischen 15 und 35 mm, liegt.

10. Modul nach einem der vorhergehenden Ansprüche, wobei die Platte (1) eine zweite abgeschrägte Seitenkante (1.3) aufweist und das Modul ein zweites Paar Seitenleisten (6, 7) aufweist; wobei das zweite Paar Seitenleisten (6, 7) eine dritte Seitenleiste (6) und eine vierte Seitenleiste (7) aufweist; wobei die dritte Seitenleiste (6) eine erste Längskante und eine zweite Längskante, eine Außenfläche (6.3) und eine erste Endkante (6.4) und eine zweite Endkante (6.5) aufweist; wobei die vierte Seitenleiste (7) eine erste Längskante (7.4) und eine zweite Längskante (7.5), eine Außenfläche (7.3) und eine erste Endkante (7.4) und eine zweite Endkante (7.5) aufweist;
wobei:
die zweite Längskante der dritten Seitenleiste (6) und die erste Längskante der vierten Seitenleiste (7) in im Wesentlichen komplementären Winkeln abgeschrägt und aneinander befestigt sind;
die erste Längskante der dritten Seitenleiste (6) und die zweite Seitenkante (1.3) der Platte (1) in im Wesentlichen komplementären Winkeln abgeschrägt und aneinander befestigt sind;
die zweite Längskante der vierten Seitenleiste (7) und die zweite Seitenkante (1.3) der Platte (1) im Wesentlichen mit demselben Abschrägungswinkel abgeschrägt und aneinander befestigt sind;
die erste Endkante (6.4) der dritten Seitenleiste (6) und die zweite Endkante (4.5) der ersten Vorderleiste (4) in im Wesentlichen komplementären Winkeln abgeschrägt und so aneinander befestigt sind, dass die Längsrichtungen der dritten Seitenleiste (6) und der ersten Vorderleiste (4) im Wesentlichen senkrecht sind und die Außenfläche der dritten Seitenleiste (6) im Wesentlichen senkrecht zur Außenfläche (4.3) der ersten Vorderleiste (4) ist; und
die erste Endkante der vierten Seitenleiste (7) und die zweite Endkante der zweiten Vorderleiste (5) in im Wesentlichen komplementären Winkeln abgeschrägt und so aneinander befestigt sind, dass die Längsrichtungen der vierten Seitenleiste (7) und der zweiten Vorderleiste (5) im Wesentlichen senkrecht sind und die Außenfläche der vierten Seitenleiste (7) im Wesentlichen koplanar mit der Außenfläche (5.3) der zweiten Vorderleiste (5) ist.

11. Modul nach einem der vorhergehenden Ansprüche, wobei die Platte (1) eine zweite abgeschrägte Vorderkante (1.4) aufweist und das Modul ein zweites Paar Vorderleisten aufweist; wobei das zweite Paar Vorderleisten eine dritte Vorderleiste und eine vierte Vorderleiste aufweist; wobei die dritte Vorderleiste eine erste Längskante und eine zweite Längskante, eine Außenfläche, und eine erste Endkante und eine zweite Endkante aufweist; wobei die vierte Vorderleiste eine erste Längskante und eine zweite Längskante, eine Außenfläche und eine erste Endkante und eine zweite Endkante aufweist;
wobei:
die zweite Längskante der dritten Vorderleiste und die erste Längskante der vierten Vorderleiste in im Wesentlichen komplementären Winkeln abgeschrägt und aneinander befestigt sind;
die erste Längskante der dritten Vorderleiste und die zweite Vorderkante (1.4) der Platte (1) in im Wesentlichen komplementären Winkeln abgeschrägt und aneinander befestigt sind;
die zweite Längskante der vierten Vorderleiste und die zweite Vorderkante (1.4) der Platte (1) im Wesentlichen mit demselben Abschrägungswinkel abgeschrägt und aneinander befestigt sind;
die zweite Endkante der ersten Seitenleiste (2) und die erste Endkante der dritten Vorderleiste in im Wesentlichen komplementären Winkeln abgeschrägt und aneinander befestigt sind, so dass die Längsrichtungen der ersten Seitenleiste (2) und der dritten Vorderleiste im Wesentlichen senkrecht sind und die Außenfläche (2.3) der ersten Seitenleiste (2) im Wesentlichen senkrecht zur Außenfläche der dritten Vorderleiste ist; und
die zweite Endkante der zweiten Seitenleiste (3) und die erste Endkante der vierten Vorderleiste in im Wesentlichen komplementären Winkeln abgeschrägt und so aneinander befestigt sind, dass die Längsrichtung der zweiten Seitenleiste (3) und der vierten Vorderleiste im Wesentlichen senkrecht sind und die Außenfläche (3.3) der zweiten Seitenleiste (3) im Wesentlichen koplanar mit der Außenfläche der vierten Vorderleiste ist.

12. Verfahren zum Herstellen eines Moduls nach einem der vorhergehenden Ansprüche, das die folgenden Schritte aufweist:
a) Bereitstellen einer laminierten Platte (1), die eine Deckschicht (1.10) und eine Trägerschicht (1.20) aufweist, wobei die Deckschicht (1.10) eine obere Fläche (A) und die Trägerschicht (1.20) eine untere Fläche (B) definiert, und wobei die Platte (1) eine erste Seitenkante (1.1) und eine erste Vorderkante (1.2) aufweist, die beide so abgeschrägt sind, dass die obere Fläche (A) der Platte größer ist als die untere Fläche (B) der Platte;
b) Bereitstellen einer ersten Seitenleiste (2) und einer zweiten Seitenleiste (3); wobei die erste Seitenleiste (2) eine erste Längskante (2.1) und eine zweite Längskante (2.2), eine Außenfläche (2.3) sowie eine erste Endkante (2.4) und eine zweite Endkante (2.5) aufweist; wobei die zweite Seitenleiste (3) eine erste Längskante (3.1) und eine zweite Längskante (3.2), eine Außenfläche (3.3), und eine erste Endkante (3.4) und eine zweite Endkante (3.5) aufweist; wobei die zweite Längskante (2.2) der ersten Seitenleiste (2) und die erste Längskante (3.1) der zweiten Seitenleiste (3) in im Wesentlichen komplementären Winkeln abgeschrägt sind; wobei die erste Längskante (2.1) der ersten Seitenleiste (2) und die erste Seitenkante (1.1) der Platte (1) in im Wesentlichen komplementären Winkeln abgeschrägt sind; und wobei die zweite Längskante (3.2) der zweiten Seitenleiste (3) und die erste Seitenkante (1.1) der Platte (1) im Wesentlichen mit demselben Abschrägungswinkel abgeschrägt sind;
c) Bereitstellen einer ersten Vorderleiste (4) und einer zweiten Vorderleiste (5); wobei die erste Vorderleiste (4) eine erste Längskante (4.1) und eine zweite Längskante (4.2), eine Außenfläche (4.3), und eine erste Endkante (4.4) und eine zweite Endkante (4. 5) aufweist; wobei die zweite Vorderleiste (5) eine erste Längskante (5.1) und eine zweite Längskante (5.2), eine Außenfläche (5.3), und eine erste Endkante (5.4) und eine zweite Endkante (5.5) aufweist; wobei die zweite Längskante (4.2) der ersten Vorderleiste (4) und die erste Längskante (5.1) der zweiten Vorderleiste (5) in im Wesentlichen komplementären Winkeln abgeschrägt sind; wobei die erste Längskante (4.1) der ersten Vorderleiste (4) und die erste Vorderkante (1.2) der Platte (1) in im Wesentlichen komplementären Winkeln abgeschrägt sind; und wobei die zweite Längskante (5.2) der zweiten Vorderleiste (5) und die erste Vorderkante (1.2) der Platte (1) im Wesentlichen mit demselben Abschrägungswinkel abgeschrägt sind;
d) Befestigen der zweiten Längskante (2.2) der ersten Seitenleiste (2) und der ersten Längskante (3.1) der zweiten Seitenleiste (3);
e) Befestigen der ersten Längskante (2.1) der ersten Seitenleiste (2) und der ersten Seitenkante (1.1) der Platte (1);
f) Befestigen der zweiten Längskante (3.2) der zweiten Seitenleiste (3) und der ersten Seitenkante (1.1) der Platte (1);
g) Befestigen der zweiten Längskante (4.2) der ersten Vorderleiste (4) und der ersten Längskante (5.1) der zweiten Vorderleiste (5);
h) Befestigen der ersten Längskante (4.1) der ersten Vorderleiste (4) und der ersten Vorderkante (1.2) der Platte (1);
i) Befestigen der zweiten Längskante (5.2) der zweiten Vorderleiste (5) und der ersten Vorderkante (1.2) der Platte (1).

13. Verfahren nach dem vorhergehenden Anspruch, wobei:
die erste Endkante (2.4) der ersten Seitenleiste (2) und die erste Endkante (4.4) der ersten Vorderleiste (4) in im wesentlichen komplementären Winkeln abgeschrägt sind; und
die erste Endkante (3.4) der zweiten Seitenleiste (3) und die erste Endkante (5.4) der zweiten Vorderleiste (5) in im Wesentlichen komplementären Winkeln abgeschrägt sind;
wobei das Verfahren zusätzlich aufweist:
j) Befestigen der ersten Endkante (2.4) der ersten Seitenleiste (2) und der ersten Endkante (4.4) der ersten Vorderleiste (4), so dass die Längsrichtungen der ersten Seitenleiste (2) und der ersten Vorderleiste (4) im Wesentlichen senkrecht sind und die Außenfläche (2.3) der ersten Seitenleiste (2) im Wesentlichen senkrecht zur Außenfläche (4.3) der ersten Vorderleiste (4) ist;
k) Anbringen der ersten Endkante (3.4) der zweiten Seitenleiste (3) und der ersten Endkante (5.4) der zweiten Vorderleiste (5), so dass die Längsrichtung der zweiten Seitenleiste (3) und der zweiten Vorderleiste (5) im Wesentlichen senkrecht sind und die Außenfläche (3.3) der zweiten Seitenleiste (3) im Wesentlichen koplanar mit der Außenfläche (5.3) der zweiten Vorderleiste (5) ist.

14. Verfahren nach einem der Ansprüche 12 bis 13, wobei sich die Schritte a) bis c) aus den folgenden früheren Schritten ergeben:
Bereitstellen einer laminierten Platte; und
Schneiden der Platte, um die Platte (1), die erste Seitenleiste (2), die zweite Seitenleiste (3), die erste Vorderleiste (4) und die zweite Vorderleiste (5) zu erhalten.

15. Verfahren nach dem vorhergehenden Anspruch, wobei der Schritt des Bereitstellens einer laminierten Platte das Befestigen einer Trägerschicht an einer Deckschicht aufweist.

## Revendications

1. Un module stratifié comprenant un panneau stratifié (1), une première paire de lattes latérales (2, 3) et une première paire de lattes avant (4, 5) ;
le panneau (1) comprenant une couche de revêtement (1.10) et une couche de support (1.20), la couche de revêtement (1.10) définissant une surface supérieure (A) et la couche de support (1.20) définissant une surface inférieure (B), et le panneau (1) comprenant un premier bord latéral (1.1) et un premier bord avant (1.2), tous deux biseautés de telle sorte que la surface supérieure (A) du panneau soit plus grande que la surface inférieure (B) du panneau ;
la première paire de lattes latérales (2, 3) comprenant une première latte latérale (2) et une deuxième latte latérale (3) ; la première latte latérale (2) comprenant un premier bord longitudinal (2.1) et un deuxième bord longitudinal (2.2), une face extérieure (2.3), ainsi qu'un premier bord d'extrémité (2.4) et un deuxième bord d'extrémité (2.5) ; la deuxième latte latérale (3) comprenant un premier bord longitudinal (3.1) et un deuxième bord longitudinal (3.2), une face extérieure (3.3), ainsi qu'un premier bord d'extrémité (3.4) et un deuxième bord d'extrémité (3.5) ;
la première paire de lattes avant (4, 5) comprenant une première latte avant (4) et une deuxième latte avant (5) ; la première latte avant (4) comprenant un premier bord longitudinal (4.1) et un deuxième bord longitudinal (4.2), une face extérieure (4.3), ainsi qu'un premier bord d'extrémité (4.4) et un deuxième bord d'extrémité (4.5) ; la deuxième latte avant (5) comprenant un premier bord longitudinal (5.1) et un deuxième bord longitudinal (5.2), une face extérieure (5.3), ainsi qu'un premier bord d'extrémité (5.4) et un deuxième bord d'extrémité (5.5) ;
dans lequel :
le deuxième bord longitudinal (2.2) de la première latte latérale (2) et le premier bord longitudinal (3.1) de la deuxième latte latérale (3) sont biseautés selon des angles sensiblement complémentaires et sont fixés l'un à l'autre ;
le premier bord longitudinal (2.1) de la première latte latérale (2) et le premier bord latéral (1.1) du panneau (1) sont biseautés selon des angles sensiblement complémentaires et sont fixés l'un à l'autre ;
le deuxième bord longitudinal (3.2) de la deuxième latte latérale (3) et le premier bord latéral (1.1) du panneau (1) sont biseautés sensiblement selon le même angle de biseau et sont fixés l'un à l'autre ;
le deuxième bord longitudinal (4.2) de la première latte avant (4) et le premier bord longitudinal (5.1) de la deuxième latte avant (5) sont biseautés selon des angles sensiblement complémentaires et sont fixés l'un à l'autre ;
le premier bord longitudinal (4.1) de la première latte avant (4) et le premier bord avant (1.2) du panneau (1) sont biseautés selon des angles sensiblement complémentaires et sont fixés l'un à l'autre ;
le deuxième bord longitudinal (5.2) de la deuxième latte avant (5) et le premier bord avant (1.2) du panneau (1) sont biseautés sensiblement avec le même angle de biseau et sont fixés l'un à l'autre ;
le premier bord d'extrémité (2.4) de la première latte latérale (2) et le premier bord d'extrémité (4.4) de la première latte avant (4) sont biseautés selon des angles sensiblement complémentaires et sont fixés l'un à l'autre de telle sorte que les directions longitudinales de la première latte latérale (2) et de la première latte avant (4) sont sensiblement perpendiculaires et la face extérieure (2.3) de la première latte latérale (2) est sensiblement perpendiculaire à la face extérieure (4.3) de la première latte avant (4) ; et
le premier bord d'extrémité (3.4) de la deuxième latte latérale (3) et le premier bord d'extrémité (5.4) de la deuxième latte avant (5) sont biseautés selon des angles sensiblement complémentaires et sont fixés l'un à l'autre de telle sorte que les directions longitudinales de la deuxième latte latérale (3) et de la deuxième latte avant (5) sont sensiblement perpendiculaires, et la face extérieure (3.3) de la deuxième latte latérale (3) est sensiblement coplanaire avec la face extérieure (5.3) de la deuxième latte avant (5) .

2. Le module selon la revendication précédente, dans lequel le premier bord latéral (1.1) et/ou le premier bord avant (1.2) du panneau (1) est biseauté avec un angle de biseau compris entre 40° et 50°, de préférence entre 43° et 47°.

3. Le module selon l'une des revendications précédentes, dans lequel le deuxième bord longitudinal (2.2) de la première latte latérale (2) et/ou le deuxième bord longitudinal (4.2) de la première latte avant (4) est biseauté avec un angle de biseau compris entre 40° et 50°, de préférence entre 43° et 47°.

4. Le module selon l'une quelconque des revendications précédentes, dans lequel le premier bord d'extrémité (2.4) de la première latte latérale (2) et/ou le premier bord d'extrémité (3.4) de la deuxième latte latérale (3) est biseauté avec un angle de biseau compris entre 40° et 50°, de préférence entre 43° et 47°.

5. Le module selon l'une quelconque des revendications précédentes, dans lequel :
la première latte latérale (2) et la deuxième latte latérale (3) ont une longueur sensiblement égale à la largeur du panneau (1), une largeur sensiblement égale à l'épaisseur du panneau (1), et une épaisseur sensiblement égale à la moitié de l'épaisseur du panneau (1) ; et/ou
la première latte avant (4) et la deuxième latte avant (5) ont une longueur sensiblement égale à la longueur du panneau (1), une largeur sensiblement égale à l'épaisseur du panneau (1), et une épaisseur sensiblement égale à la moitié de l'épaisseur du panneau (1) .

6. Le module selon l'une quelconque des revendications précédentes, dans lequel au moins une parmi la première latte latérale (2), la deuxième latte latérale (3), la première latte avant (4) et la deuxième latte avant (5) est une latte stratifiée comprenant une couche de revêtement (3.10, 5.10) et une couche de support (3.20, 5.20).

7. Le module selon la revendication précédente, dans lequel :
l'épaisseur de la couche de revêtement de la latte stratifiée (3.10, 5.10) est comprise entre 2 et 10 mm, de préférence encore entre 3 et 8 mm ; et/ou
l'épaisseur de la couche de support (3.20, 5.20) de la latte stratifiée est comprise entre 5 et 20 mm, de préférence encore entre 7 et 17 mm.

8. Le module selon l'une quelconque des revendications précédentes, dans lequel la couche de revêtement (1.10, 3.10, 5.10) a une épaisseur inférieure à la couche de support (1.20, 3.20, 5.20).

9. Le module selon l'une quelconque des revendications précédentes, dans lequel :
l'épaisseur de la couche de revêtement (1.10) du panneau (1) est comprise entre 2 et 10 mm, de préférence encore entre 3 et 8 mm ; et/ou
l'épaisseur de la couche de support (1.20) du panneau (1) est comprise entre 10 et 40 mm, de préférence encore entre 15 et 35 mm.

10. Le module selon l'une quelconque des revendications précédentes, dans lequel le panneau (1) comprend un deuxième bord latéral biseauté (1.3) et le module comprend une deuxième paire de lattes latérales (6, 7) ; la deuxième paire de lattes latérales (6, 7) comprend une troisième latte latérale (6) et une quatrième latte latérale (7) ; la troisième latte latérale (6) comprenant un premier bord longitudinal et un deuxième bord longitudinal, une face extérieure (6.3), et un premier bord d'extrémité (6.4) et un deuxième bord d'extrémité (6.5) ; la quatrième latte latérale (7) comprenant un premier bord longitudinal (7.4) et un deuxième bord longitudinal (7.5), une face extérieure (7.3), ainsi qu'un premier bord d'extrémité (7.4) et un deuxième bord d'extrémité (7.5) ;
dans lequel :
le deuxième bord longitudinal de la troisième latte latérale (6) et le premier bord longitudinal de la quatrième latte latérale (7) sont biseautés selon des angles sensiblement complémentaires et sont fixés l'un à l'autre ;
le premier bord longitudinal de la troisième latte latérale (6) et le deuxième bord latéral (1.3) du panneau (1) sont biseautés selon des angles sensiblement complémentaires et sont fixés l'un à l'autre ;
le deuxième bord longitudinal de la quatrième latte latérale (7) et le deuxième bord latéral (1.3) du panneau (1) sont biseautés sensiblement avec le même angle de biseau et sont fixés l'un à l'autre ;
le premier bord d'extrémité (6.4) de la troisième latte latérale (6) et le deuxième bord d'extrémité (4.5) de la première latte avant (4) sont biseautés selon des angles sensiblement complémentaires et sont fixés l'un à l'autre de telle sorte que les directions longitudinales de la troisième latte latérale (6) et la première latte avant (4) sont sensiblement perpendiculaires et la face extérieure de la troisième latte latérale (6) est sensiblement perpendiculaire à la face extérieure (4.3) de la première latte avant (4) ; et
le premier bord d'extrémité de la quatrième latte latérale (7) et le deuxième bord d'extrémité de la deuxième latte avant (5) sont biseautés selon des angles sensiblement complémentaires et sont fixés l'un à l'autre de telle sorte que les directions longitudinales de la quatrième latte latérale (7) et de la deuxième latte avant (5) sont sensiblement perpendiculaires, et la face extérieure de la quatrième latte latérale (7) est sensiblement coplanaire avec la face extérieure (5.3) de la deuxième latte avant (5).

11. Le module selon l'une quelconque des revendications précédentes, dans lequel le panneau (1) comprend un deuxième bord avant biseauté (1.4) et le module comprend une deuxième paire de lattes avant ; la deuxième paire de lattes avant comprend une troisième latte avant et une quatrième latte avant ; la troisième latte avant comprenant un premier bord longitudinal et un deuxième bord longitudinal, une face extérieure, ainsi qu'un premier bord d'extrémité et un deuxième bord d'extrémité ; la quatrième latte avant comprenant un premier bord longitudinal et un deuxième bord longitudinal, une face extérieure, ainsi qu'un premier bord d'extrémité et un deuxième bord d'extrémité ;
dans lequel :
le deuxième bord longitudinal de la troisième latte avant et le premier bord longitudinal de la quatrième latte avant sont biseautés selon des angles sensiblement complémentaires et sont fixés l'un à l'autre ;
le premier bord longitudinal de la troisième latte avant et le deuxième bord avant (1.4) du panneau (1) sont biseautés selon des angles sensiblement complémentaires et sont fixés l'un à l'autre ;
le deuxième bord longitudinal de la quatrième latte avant et le deuxième bord avant (1.4) du panneau (1) sont biseautés sensiblement avec le même angle de biseau et sont fixés l'un à l'autre ;
le deuxième bord d'extrémité de la première latte latérale (2) et le premier bord d'extrémité de la troisième latte avant sont biseautés selon des angles sensiblement complémentaires et sont fixés l'un à l'autre de telle sorte que les directions longitudinales de la première latte latérale (2) et de la troisième latte avant sont sensiblement perpendiculaires et la face extérieure (2.3) de la première latte latérale (2) est sensiblement perpendiculaire à la face extérieure de la troisième latte avant ; et
le deuxième bord d'extrémité de la deuxième latte latérale (3) et le premier bord d'extrémité de la quatrième latte avant sont biseautés selon des angles sensiblement complémentaires et sont fixés l'un à l'autre de telle sorte que la direction longitudinale de la deuxième latte latérale (3) et de la quatrième latte avant soit sensiblement perpendiculaire, et que la face extérieure (3.3) de la deuxième latte latérale (3) soit sensiblement coplanaire avec la face extérieure de la quatrième latte avant.

12. Procédé de fabrication d'un module selon l'une quelconque des revendications précédentes qui comprend les étapes suivantes :
a) le fait de fournir un panneau stratifié (1) comprenant une couche de revêtement (1.10) et une couche de support (1.20), la couche de revêtement (1.10) définissant une surface supérieure (A) et la couche de support (1.20) définissant une surface inférieure (B) ; et le panneau (1) comprend un premier bord latéral (1.1) et un premier bord avant (1.2), tous deux biseautés de telle sorte que la surface supérieure (A) du panneau est plus grande que la surface inférieure (B) du panneau ;
b) le fait de prévoir une première latte latérale (2) et une deuxième latte latérale (3) ; la première latte latérale (2) comprenant un premier bord longitudinal (2.1) et un deuxième bord longitudinal (2.2), une face extérieure (2.3), ainsi qu'un premier bord d'extrémité (2.4) et un deuxième bord d'extrémité (2.5) ; la deuxième latte latérale (3) comprenant un premier bord longitudinal (3.1) et un deuxième bord longitudinal (3.2), une face extérieure (3.3), ainsi qu'un premier bord d'extrémité (3.4) et un deuxième bord d'extrémité (3.5) ; le deuxième bord longitudinal (2.2) de la première latte latérale (2) et le premier bord longitudinal (3.1) de la deuxième latte latérale (3) sont biseautés selon des angles sensiblement complémentaires ; le premier bord longitudinal (2.1) de la première latte latérale (2) et le premier bord latéral (1.1) du panneau (1) sont biseautés selon des angles sensiblement complémentaires ; et
le deuxième bord longitudinal (3.2) de la deuxième latte latérale (3) et le premier bord latéral (1.1) du panneau (1) sont biseautés sensiblement avec le même angle de biseau ;
c) le fait de prévoir une première latte avant (4) et une deuxième latte avant (5) ; la première latte avant (4) comprenant un premier bord longitudinal (4.1) et un deuxième bord longitudinal (4.2), une face extérieure (4.3), ainsi qu'un premier bord d'extrémité (4.4) et un deuxième bord d'extrémité (4.5) ; la deuxième latte avant (5) comprenant un premier bord longitudinal (5.1) et un deuxième bord longitudinal (5.2), une face extérieure (5.3), ainsi qu'un premier bord d'extrémité (5.4) et un deuxième bord d'extrémité (5.5) ; le deuxième bord longitudinal (4.2) de la première latte avant (4) et le premier bord longitudinal (5.1) de la deuxième latte avant (5) sont biseautés selon des angles sensiblement complémentaires ; le premier bord longitudinal (4.1) de la première latte avant (4) et le premier bord avant (1.2) du panneau (1) sont biseautés selon des angles sensiblement complémentaires ; et le deuxième bord longitudinal (5.2) de la deuxième latte avant (5) et le premier bord avant (1.2) du panneau (1) sont biseautés sensiblement avec le même angle de biseau ;
d) le fait de fixer le deuxième bord longitudinal (2.2) de la première latte latérale (2) et le premier bord longitudinal (3.1) de la deuxième latte latérale (3) ;
e) le fait de fixer le premier bord longitudinal (2.1) de la première latte latérale (2) et le premier bord latéral (1.1) du panneau (1) ;
f) le fait de fixer le deuxième bord longitudinal (3.2) de la deuxième latte latérale (3) et le premier bord latéral (1.1) du panneau (1) ;
g) le fait de fixer le deuxième bord longitudinal (4.2) de la première latte avant (4) et le premier bord longitudinal (5.1) de la deuxième latte avant (5) ;
h) le fait de fixer le premier bord longitudinal (4.1) de la première latte avant (4) et le premier bord avant (1.2) du panneau (1) ;
i) le fait de fixer le deuxième bord longitudinal (5.2) de la deuxième latte avant (5) et le premier bord avant (1.2) du panneau (1).

13. Le procédé selon la revendication précédente, dans lequel :
le premier bord d'extrémité (2.4) de la première latte latérale (2) et le premier bord d'extrémité (4.4) de la première latte avant (4) sont biseautés selon des angles sensiblement complémentaires ; et
le premier bord d'extrémité (3.4) de la deuxième latte latérale (3) et le premier bord d'extrémité (5.4) de la deuxième latte avant (5) sont biseautés selon des angles sensiblement complémentaires ;
le procédé comprenant en outre :
j) le fait de fixer le premier bord d'extrémité (2.4) de la première latte latérale (2) et le premier bord d'extrémité (4.4) de la première latte avant (4) de telle sorte que les directions longitudinales de la première latte latérale (2) et de la première latte avant (4) sont sensiblement perpendiculaires et la face externe (2.3) de la première latte latérale (2) est sensiblement perpendiculaire à la face externe (4.3) de la première latte avant (4) ;
k) le fait de fixer le premier bord d'extrémité (3.4) de la deuxième latte latérale (3) et le premier bord d'extrémité (5.4) de la deuxième latte avant (5) de telle sorte que la direction longitudinale de la deuxième latte latérale (3) et de la deuxième latte avant (5) sont sensiblement perpendiculaires, et la face externe (3.3) de la deuxième latte latérale (3) est sensiblement coplanaire avec la face externe (5.3) de la deuxième latte avant (5).

14. Le procédé selon l'une des revendications 12 à 13, dans lequel les étapes a) à c) résultent des étapes antérieures suivantes :
le fait de fournir un panneau stratifié ; et
le fait de découper le panneau pour obtenir le panneau (1), la première latte latérale (2), la deuxième latte latérale (3), la première latte avant (4), et la deuxième latte avant (5).

15. Le procédé selon la revendication précédente, dans lequel l'étape de fourniture d'un panneau stratifié comprend le fait de fixer une couche de support sur une couche de revêtement.
